# EUROPÄISCHE PATENTSCHRIFT

(11) **EP 0 896 964 B1**
(45) Veröffentlichungstag und Bekanntmachung des Hinweises auf die Patenterteilung: **08.03.2006**
(21) Anmeldenummer: 98810676.1
(22) Anmeldetag: 15.07.1998
(51) Int. Cl.: C07D 471/06, C09B 5/62

(54) **Perylenhydrazidimide als Carbonylderivatisierungsreagenzien**
Perylenehydrazideimides as carbonyl derivatizing agents
Pérylénehydrazideimides comme reactifs de dérivation de carbonyl

(30) Priorität: 24.07.1997 CH 178897; 24.07.1997 CH 178997
(43) Veröffentlichungstag der Anmeldung: 17.02.1999
(73) Patentinhaber: Ciba Specialty Chemicals Holding Inc., 4057 Basel (CH)
(72) Erfinder: Langhals, Heinz, 85521 Ottobrunn (DE); Jona, Wolfgang, 84478 Waldkraiburg (DE)

(56) Entgegenhaltungen:
- EP-A- 0 484 784
- EP-A- 0 864 613
- CH-A- 548 440
- DD-A- 299 734
- DE-A- 2 237 539
- FR-A- 1 580 624
- US-A- 5 359 092
- US-A- 5 645 965
- CHEMICAL ABSTRACTS, vol. 85, no. 8, 23. August 1976 Columbus, Ohio, US; abstract no. 48251, Seite 85; XP002090855 & PL 77 081 A (POLITECHNIKA LODZKA) 28. April 1975

## Beschreibung

Die vorliegende Erfindung betrifft Perylenhydrazid-imide der allgemeinen Formel I 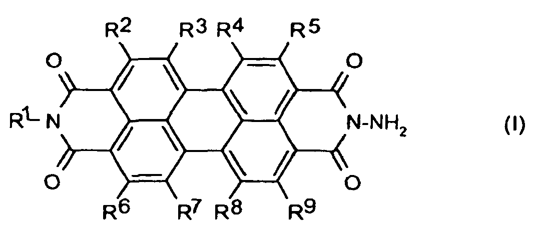 worin R¹ 1-(C₁-C₉-Alkyl)-C₂-C₁₀alkyl oder C₁-C₆-alkylsubstituiertes Phenyl ist,
R², R³, R⁴, R⁵, R⁶, R⁷, R⁸, R⁹ gleich oder verschieden für Wasserstoff, oder ein Rest bis acht Reste für einen Rest stehen, ausgewählt aus der Gruppe, bestehend aus einem unsubstituierten oder durch Halogen, Cyano oder C₁-C₁₈-Alkyl substituierten Phenyl, wobei C₁-C₁₈-Alkyl gegebenenfalls durch Fluor, Cyano, -OCOR¹³, -OR¹¹, -OCOOR¹³, -CON(R¹¹)(R¹²) oder -OCONHR¹³, substituiert ist, worin R¹³ C₁-C₁₈-Alkyl, C₆-C₁₀-Aryl, Pyridyl, Pyrimidyl, Pyrazinyl, Triazinyl, Furanyl, Pyrrolyl, Thiophenyl, Chinolyl, Isochinolyi oder Coumarinyl, bedeutet, R₁₁ und R₁₂ Wasserstoff, unsubstituiertes oder durch die Cyano- oder Hydroxi-Gruppe substituiertes C₁-C₁₈-Alkyl sind, oder R¹¹ und R¹² gemeinsam oder gegebenenfalls zusätzlich zusammen mit mindestens einem der anderen Reste R² bis R⁹ einen Pyridin-, Pyrrol-, Furan- oder Pyranring bilden, einem unsubstituierten oder durch Halogen, Cyano oder C₁-C₁₈-Alkyl substituierten Diphenyl, wobei C₁-C₁₈-Alkyl gegebenenfalls durch Fluor, Cyano, -OCOR¹³, -OR¹¹, -OCOOR¹³, -CON(R¹¹)(R¹²) oder -OCONHR¹³, worin R¹³ C₁-C₁₈-Alkyl, C₆-C₁₀-Aryl Pyridyl, Pyrimidyl, Pyrazinyl, Triazinyl, Furanyl, Pyrrolyl, Thiophenyl, Chinolyl, Isochinolyl oder Coumarinyl, bedeutet, R₁₁ und R₁₂ Wasserstoff, unsubstituiertes oder durch die Cyano- oder Hydroxi-Gruppe substituiertes C₁-C₁₈-Alkyl sind, oder R¹¹ und R¹² gemeinsam oder gegebenenfalls zusätzlich zusammen mit mindestens einem der anderen Reste R² bis R⁹ einen Pyridin-, Pyrrol-, Furan- oder Pyranring bilden, einem unsubstituierten oder durch Halogen, Cyano oder C₁-C₁₈-Alkyl substituierten Naphthyl, wobei C₁-C₁₈-Alkyl gegebenenfalls durch Fluor, Cyano, -OCOR¹³, -OR¹¹, -OCOOR¹³, -CON(R¹¹)(R¹²) oder -OCONHR¹³, worin R¹³ C₁-C₁₈-Alkyl, C₆-C₁₀-Aryl, Pyridyl, Pyrimidyl, Pyrazinyl, Triazinyl, Furanyl, Pyrrolyl, Thiophenyl, Chinolyl, Isochinolyl oder Coumarinyl, bedeutet, R₁₁ und R₁₂ Wasserstoff, unsubstituiertes oder durch die Cyano- oder Hydroxi-Gruppe substituiertes C₁-C₁₈-Alkyl sind, oder R¹¹ und R¹² gemeinsam oder gegebenenfalls zusätzlich zusammen mit mindestens einem der anderen Reste R² bis R⁹ einen Pyridin-, Pyrrol-, Furan- oder Pyranring bilden, Pyridyl, Pyrimidyl, Pyrazinyl, Triazinyl, Furanyl, Pyrrolyl, Thiophenyl, Chinolyl, Isochinolyl, Coumarinyl, Benzofuranyl, Benzimidazolyl, Benzoxazolyl, Dibenzfuranyl, Benzothiophenyl, Dibenzothiophenyl, Indolyl, Carbazolyl, Pyrazolyl, Imidazolyl, Oxazolyl, Isoxazolyl, Thiazolyl, Indazolyl, Benzthiazolyl, Pyridazinyl, Cinnolyl, Chinazolyl, Chinoxalyl, Phthalazinyl, Phthalazindionyl, Phthalimidyl, Chromonyl, Naphtholactamyl, Benzopyridonyl, ortho-Sulfobenzimidyl, Maleinimidyl, Naphthyridinyl, Benzimidazolonyl, Benzoxazolonyl, Benzthiazolonyl, Benzthiazolinyl, Chinazolonyl, Pyrimidyl, Chinoxalonyl, Phthalazonyl, Dioxapyrimidinyl, Pyridonyl, Isochinolonyl, Isothiazolyl, Benzisoxazolyl, Benzisothiazolyl, Indazolonyl, Acridinyl, Acridonyl, Chinazolindionyl, Benzoxazindionyl, Benzoxazinonyl oder Phthalimidyl, Halogen, unsubstituiertem oder durch Fluor, Cyano, -OCOR¹³, -OR¹¹, -OCOOR¹³, -CON(R¹¹)(R¹²) oder -OCONHR¹³, substituiertem C₁-C₁₈-Alkyl, -OR¹⁰, -CN, -NR¹¹R¹², -COR¹³, -NR¹⁴COR¹³, -NR¹⁰COOR¹³, -NR¹⁰CONR¹¹R¹², -NHSO₂R¹³, -SO₂R¹³, -SOR¹³, -SO₂OR¹³, -CONR¹¹R¹², -SO₂NR¹¹R¹², -N=NR¹⁵, -OGOR¹³ und -OCONHR¹³, wobei je zwei benachbarte Reste zusammen einen 5- oder 6-gliedrigen carbocyclischen oder heterocyclischen Ring bilden können, wobei R¹³ C₁-C₁₈-Alkyl, C₆-C₁₀-Aryl oder unsubstituiertes oder durch Halogen, C₁-C₄-Alkyl, oder C₁-C₄-Alkoxi substituiertes Benzyl oder einen fünf- bis siebengliedrigen heterocyclischen Rest bedeutet, R¹¹ und R¹² unabhängig voneinander für Wasserstoff, unsubstituiertes oder mit Cyano- oder Hydroxi-Gruppen substituiertes C₁-C₁₈-Alkyl, C₃- bis C₂₄-Cycloalkyl, C₆-C₁₀-Aryl oder 5- bis 7-gliedriges Heteroaryl stehen, oder worin R¹¹ und R¹² gemeinsam zusammen oder gegebenenfalls zusätzlich zusammen mit mindestens einem der anderen Reste R² bis R⁹ einen 5- oder 6-gliedrigen carbocyclischen oder heterocyclischen Ring bilden, R¹⁰ für Wasserstoff, C₁-C₁₈-Alkyl, C₃- bis C₂₄-Cycloalkyl, C₆-C₁₀-Aryl oder 5- bis 7-gliedriges Heteroaryl steht, R¹⁴ für Wasserstoff, unsubstituiertes oder mit Cyano-, Hydroxi- oder C₁-C₄-Alkoxicarbonyl-Gruppen substituiertes C₁-C₁₈-Alkyl, C₃- bis C₂₄-Cycloalkyl, C₁-C₄-Alkylaryl, unsubstituiertes oder mit Halogen, C₁-C₄-Alkyl- oder C₁-C₄-Alkoxigruppen substituiertes C₆-C₁₀-Aryl, oder einen 5- bis 7-gliedrigen Heterocyclus steht, und R¹⁵ für unsubstituiertes oder mit Halogen, C₁-C₄-Alkyl- oder C₁-C₄-Alkoxigruppen substituier-tes C₆-C₁₀-Aryl steht.

Des weiteren betrifft die Erfindung Perylen-hydrazone der allgemeinen Formel II 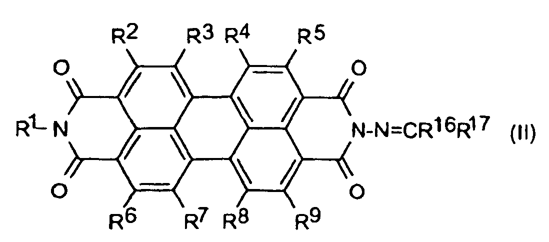 sowie Verfahren zur Herstellung der Verbindungen I und II und deren Verwendung als Farbmittel.

Für die Derivatisierung von Aldehyden und Ketonen steht eine Reihe von etablierten Methoden zur Verfügung, wie die Bildung von Oximen, Semicarbazonen oder Phenyl-hydrazonen, bei denen der Schmelzpunkt der Derivate das Charakteristikum darstellt. Einen wesentlichen Fortschritt brachte die Verwendung des 2,4-Dinitrophenylhydrazins als Reagenz, da zum einen die 2,4-Dinitrophenylhydrazone von Aldehyden und Ketonen nicht nur charakteristisch schmelzen, ausgesprochen gut kristallisieren und dadurch auch leicht zu reinigen sind, sondern darüber hinaus auch eine typische Eigenfarbe aufweisen, die zudem in Abhängigkeit von der Substitution variiert (siehe Organikum, 5.Aufl. VEB Berlin 1965). Die Eigenfarbe kann für eine leichte dünnschichtchromatographische Identifizierung der Derivate über ihre R_{f}-Werte verwendet werden, die eine zusätzliche Absicherung der Struktur darstellt. Die Färbung der Substanzen ermöglicht darüber hinaus den Nachweis kleiner Mengen - eine weitere Steigerung der Nachweisempfindlichkeit wäre aber insbesondere bei der Untersuchung komplexer Gemische wünschenswert.

Perylenfarbstoffe, insbesondere Perylen-3,4:9,10-tetracarbonsäurebisimide, fluoreszieren in Lösung mit hohen Quantenausbeuten (meist fast 100%), sind sehr lichtecht und weisen hohe molare Extinktionskoeffizienten von knapp 100 000 auf, so daß sie über ihre Fluoreszenz mit großer Empfindlichkeit detektiert werden können.

Perylenfarbstoffe mit freien N-Amino-Gruppen sind nur wenig untersucht worden. Der bekannte Farbstoff (RN 49546-23-8) (siehe Organikum, 5.Aufl. VEB Berlin 1965 sowie H.Langhals in Heterocycles 40 (1995) 477) der allgemeinen Formel IV 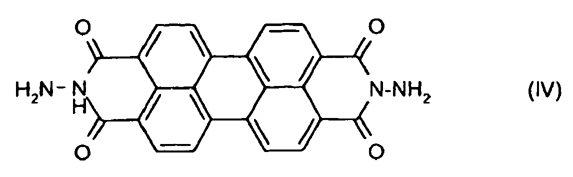 ist hierfür auch wenig geeignet, da er ausgesprochen schwerlöslich ist und Pigment-Charakter hat.

Eigenschaften wie die Löslichkeit der Farbmittel lassen sich üblicherweise mit den Substituenten an den Stickstoffatomen steuern, nur wenig davon werden in der Regel die spektralen Eigenschaften, erkennbar z.B. durch UV/Vis-Spektren, beeinflußt. In Heterocyctes 40 (1995) 477) wird diskutiert, daß dies auf Orbitalknoten im höchsten besetzten Molekülorbital ("HOMO") und im niedrigsten unbesetzten Molekülorbital ("LUMO") der entsprechenden Imid-Stickstoffatome zurückzuführen ist. Beobachtet werden langwellige Absorptionsmaxima bei 526 nm mit molaren Extinktionskoeffizienten in der Regel im Bereich von 85 000 bis 95 000.

Die Gleichartigkeit der UV/Vis-Spektren verschiedener Perylenbisimide ist im allgemeinen für viele Anwendungen, wie bei Tracer-Experimenten in der Analytik, durchaus erwünscht, andererseits ist die Unmöglichkeit, die Spektren an spezielle Erfordernisse anzupassen, unerwünscht:

Die EP-A 711 812 beschreibt di-, tri- und tetrachromophore Perylenfarbstoffe, deren jeweilige Peryleneinheiten über einen carbocyclischen oder heterocyclischen aromatischen Rest verbunden sind.

Aufgabe der vorliegenden Erfindung war es daher, Perylen-Derivate bereitzustellen, die die oben genannten Nachteile nicht aufweisen. Insbesondere sollten leichtlösliche und gut zugängliche Aminoderivate zur Verfügung gestellt werden, die sich als Reagenzien für ein Nachweisverfahren von Carbonylverbindungen eignen. Ferner sollten Perylenderivate zur Verfügung gestellt werden, deren spektrale Eigenschaften deutlich von denen bekannter Perylenderivate unterscheidbar ist. Des weiteren sollten die UV/Vis-Spektren durch Kopplung mehrerer Perylengrundeinheiten direkt über die jeweiligen Imid-Stickstoffatome modifizierbar sein.

Demgemäß wurden die erfindungsgemäßen Perylenhydrazid-imide I gefunden.

Des weiteren wurden die Perylenhydrazone II, sowie Verfahren zu deren Herstellung und deren Verwendung u.a. als Farbmittel gefunden.

C₁-C₁₈-Alkyl ist z.B. Methyl, Ethyl, n-Propyl, Isopropyl, n-Butyl, i-Butyl, sec.-Butyl, tert.-Butyl, tert.-Amyl, n-Hexyl, 1,1,3,3,-Tetramethylbutyl, n-Heptyl, n-Octyl, n-Nonyl, n-Decyl, n-Undecyl, n-Dodecyl, n-Octadecyl, 3-Pentyl, 4-Heptyl, 5-Nonyl, 6-Undecyl, 7-Tridecyl, 3-Hexyl, 3-Heptyl, 3-Nonyl, 3-Undecyl, bevorzugt C₁-C₁₂-Alkyl wie Methyl, Ethyl, n-Propyl, Isopropyl, n-Butyl, sec.-Butyl, tert.-Butyl, tert.-Amyl, n-Hexyl, n-Heptyl, n-Octyl, n-Nonyl, n-Decyl, n-Undecyl, n-Dodecyl, 3-Pentyl, 4-Heptyl, 5-Nonyl, 6-Undecyl, 7-Tridecyl, 3-Hexyl, 3-Heptyl, 3-Nonyl, 3-Undecyl, besonders bevorzugt C₁-C₈-Alkyl wie Methyl, Ethyl, n-Propyl, Isopropyl, n-Butyl, i-Butyl, sec.-Butyl, tert.-Butyl, tert.-Amyl, n-Hexyl, 1,1,3,3,-Tetramethylbutyl, n-Heptyl, n-Octyl, 3-Pentyl, 4-Heptyl, 3-Hexyl, 3-Heptyl, ganz besonders bevorzugt C₁-C₄-Alkyl wie Methyl, Ethyl, n-Propyl, isopropyl, n-Butyl, i-Butyl, sec.-Butyl, tert.-Butyl;
wobei die genannten Alkylgruppen mit folgenden, in der Regel die Hydrophilie nicht erhöhenden Gruppen substituiert sein können wie
Fluor, Cyano, -OCOR¹³, -OR¹¹, -OCOOR¹³, -CON(R¹¹)(R¹²) oder -OCCNHR¹³, worin R¹³ C₁-C₁₈-Alkyl wie Methyl, Ethyl, n-Propyl, Isopropyl, n-Butyl, i-Butyl, sec.-Butyl, tert.-Amyl, n-Hexyl, 1,1,3,3,-Tetramethylbutyl, n-Heptyl, n-Octyl, n-Nonyl, n-Decyl, n-Undecyl, n-Dodecyl, n-Octadecyl, 3-Pentyl, 4-Heptyl, 5-Nonyl, 6-Undecyl, 7-Tridecyl, 3-Hexyl, 3-Heptyl, 3-Nonyl, 3-Undecyl, bevorzugt C₁-C₁₂-Alkyl wie Methyl, Ethyl, n-Propyl, Isopropyl, n-Butyl, sec.-Butyl, tert.-Butyl, tert.-Amyl, n-Hexyl, n-Heptyl, n-Octyl, n-Nonyl, n-Decyl, n-Undecyl, n-Dodecyl, 3-Pentyl, 4-Heptyl, 5-Nonyl, 6-Undecyl, 7-Tridecyl, 3-Hexyl, 3-Heptyl, 3-Nonyl, 3-Undecyl, C₆-C₁₀-Aryl wie Phenyl, 2,5-Di-tert.-butylphenyl und Naphthyl, bevorzugt Phenyl, Naphthyl, oder unsubstituiertes oder durch Halogen wie Chlor und Fluor, bevorzugt Fluor, C₁-C₄-Alkyl oder -O-C₁-C₄-Alkyl substituiertes Benzyl oder einen fünf- bis siebengliedrigen heterocyclischen Rest wie Pyridyl, Pyrimidyl, Pyrazinyl, Triazinyl, Furanyl, Pyrrolyl, Thiophenyl, Chinolyl, Isochinolyl, Coumarinyl, bedeutet,
und
R¹¹ und R¹² stehen für Wasserstoff, unsubstituiertes oder durch die Cyano- oder Hydroxi-Gruppe substituiertes C₁-C₁₈-Alkyl wie bereits oben genannt, bevorzugt C₁-C₁₂-Alkyl, besonders bevorzugt C₁-C₈-Alkyl, ganz besonders bevorzugt C₁-C₄-Alkyl wie bereits weiter oben genannt, C₃- bis C₂₄-Cycloalkyl, bevorzugt C₅-, C₆-, C₁₂-, C₁₅-, C₁₆-, C₂₀- und C₂₄-Cycloalkyl, Aryl oder Heteroaryl, bevorzugt abgeleitet von den oben genannten carbo- und heterocyclischen aromatischen Resten, insbesondere unsubstituiertes oder durch Halogen, C₁-C₄-Alkyl oder C₁-C₄-Alkoxi substituiertes Phenyl bedeuten, oder worin R¹¹ und R¹² gemeinsam oder gegebenenfalls zusätzlich zusammen mit mindestens einem der anderen Reste R² bis R⁹ einen 5- oder 6-gliedrigen carbocyclischen oder heterocyclischen Ring bilden wie einen Pyridin-, Pyrrol-, Furan- oder Pyranring, bevorzugte Reste -OR¹¹ sind Hydroxi, -O-Methyl, -O-Ethyl, -O-i-Propyl-, -O-i-Butyl, -O-Phenyl, -O-2,5-Di-tert.-butylphenyl, bevorzugte Reste -CON(R¹¹)(R¹²) sind -CONH₂, -CONMe₂, -CONEt₂, -CON(iPr)₂, -CON(iBu)₂, -CONPh₂, -CON(2,5-Di-tert.-butylphenyl)₂.

In einer weiteren bevorzugten Ausführungsform verwendet man als Substituenten an den Alkylgruppen mono- oder dialkylierte Aminogruppen, Arylreste wie Naphthyl oder insbesondere unsubstituiertes oder durch Halogen, Alkyl oder -O-Alkyl substituiertes Phenyl, oder ferner heterocyclische aromatische Reste wie 2-Thienyl-, 2-Benzoxazolyl-, 2-Benzthiazolyl-, 2-Benzimidazolyl-, 6-Benzimidazolonyl-, 2-, 3- oder 4-Pyridinyl-, 2-, 4-, oder 6-Chinolyl- oder 1-, 3-, 4-, 6-, oder 8-Isochinolylreste.

Enthalten die genannten Substituenten ihrerseits wieder Alkyl, so kann dieses Alkyl verzweigt oder unverzweigt sein und vorzugsweise 1 bis 18, insbesondere 1 bis 12, vor allem 1 bis 8 und besonders bevorzugt 1 bis 4 C-Atome enthalten. Beispiele von unsubstituierten Alkylgruppen sind Methyl, Ethyl, n-Propyl, Isopropyl, n-Butyl, sec.-Butyl, tert.-Butyl, tert.-Amyl, n-Hexyl, 1,1,3,3,-Tetramethylbutyl, n-Heptyl, n-Octyl, n-Nonyl, n-Decyl, n-Undecyl, n-Dodecyl, n-Octadecyl, 3-Pentyl, 4-Heptyl, 5-Nonyl, 6-Undecyl, 7-Tridecyl, 3-Hexyl, 3-Heptyl, 3-Nonyl, 3-Undecyl, Beispiele von substituierten Alkylgruppen sind Hydroxymethyl, 2-Hydroxyethyl, Trifluormethyl, Trifluoroethyl, Cyanomethyl, Methoxycarbonylmethyl, Acetoxymethyl oder Benzyl.
- -OR¹⁰, wobei R¹⁰ für Wasserstoff, C₁-C₁₈-Alkyl wie für R¹³ bereits definiert, einschließlich der bevorzugten dort genannten Varianten, C₃- bis C₂₄-Cycloalkyl, bevorzugt bevorzugt C₅-, C₆-, C₁₂-, C₁₅-, C₁₆-, C₂₀- und C₂₄-Cycloalkyl, C₆-C₁₀-Aryl wie Naphthyl und Phenyl, bevorzugt unsubstituiertes Phenyl und durch Halogen, C₁-C₄-Alkyl oder C₁-C₄-Alkoxi substituiertes Phenyl, oder 5- bis 7-gliedriges Heteroaryl steht. Beispielhaft als bevorzugte Reste für R¹⁰ seien genannt: Methyl, Ethyl, n-Propyl, Isopropyl, n-Butyl, sec.- Butyl, tert.-Butyl, tert.-Amyl, n-Hexyl, 1,1,3,3,-Tetramethylbutyl, n-Heptyl, n-Octyl, n-Nonyl,
- n-Decyl, n-Undecyl, n-Dodecyl, n-Octadecyl, 3-Pentyl, 4-Heptyl, 5-Nonyl, 6- Undecyl,
- 7-Tridecyl, 3-Hexyl, 3-Heptyl, 3-Nonyl, 3-Undecyl, Hydroxymethyl, 2-Hydroxyethyl, Trifluormethyl, Trifluoroethyl, Cyanomethyl, Methoxycarbonylmethyl, Acetoxymethyl, Benzyl, Phenyl, o-, m- oder p-Chlorphenyl, o-, m-, oder p-Methylphenyl, 1- oder 2-Naphthyl, Cyclopentyl, Cyclohexyl, Cyclododecyl, Cyclopentadecyl, Cyclohexadecyl, Cycloeicosanyl, Cyclotetracosanyl, Thienyl und Pyranylmethyl; bevorzugte Reste -OR¹⁰ sind Hydroxi, Methoxi, -O-Ethyl, -O-i-Propyl-, -O-i-Butyl, -O-Phenyl, -O-2,5-Di-tert.-butylphenyl;
- -NR¹¹R¹², wobei R¹¹ und R¹² die bereits oben angegebene Bedeutung haben. Beispielhaft als bevorzugte Reste seien genannt: Amino, Methylamino, Dimethylamino, Ethylamino, Diethylamino, Isopropylamino, 2-Hydroxyethylamino, 2-Hydroxypropylamino, N,N-Bis(2-hydroxyethyl)amino, Cyclopentylamino, Cyclohexylamino, Cyclododecyl-amino, Cyclopentadecylamino, Cyclohexadecylamino, Cycloeicosanylamino, Cyclotetracosanylamino, Phenylamino, N-Methylphenylamino, Benzylamino, Dibenzylamino, Piperidyl oder Morpholyl;
- -COR¹³, wobei R¹³ die weiter oben angegebene Bedeutung hat. Beispielhaft als bevorzugte Reste R¹³ seien genannt: Methyl, Ethyl, n-Propyl, Isopropyl, n-Butyl, sec.- Butyl, tert.-Butyl, tert.-Amyl, n-Hexyl, 1,1,3,3,-Tetramethylbutyl, n-Heptyl, n-Octyl, n-Nonyl, n-Decyl, n-Undecyl, n-Dodecyl, n-Octadecyl, 3-Pentyl, 4-Heptyl, 5-Nonyl, 6- Undecyl,
- 7-Tridecyl, 3-Hexyl, 3-Heptyl, 3-Nonyl, 3-Undecyl, Hydroxymethyl, 2- Hydroxyethyl, Trifluormethyl, Trifluoroethyl, Cyanomethyl, Methoxycarbonylmethyl, Acetoxymethyl, Benzyl, Phenyl, o-, m- oder p-Chlorphenyl, o-, m-, oder p-Methylphenyl, 1- oder 2-Naphthyl, Cyclopentyl, Cyclohexyl, Cyclododecyl, Cyclopentadecyl, Cyclohexadecyl, Cycloeicosanyl, Cyclotetracosanyl, Thienyl, Pyranylmethyl und Furfuryl;
- -NR¹⁴COR¹³, wobei R¹³ die weiter oben angegebene Bedeutung hat, und R¹⁴ für Wasserstoff, unsubstituiertes oder mit Cyano-, Hydroxi- oder C₁-C₄-Alkoxicarbonyl-Gruppen substituiertes C₁-C₁₈-Alkyl, C₃- bis C₂₄-Cycloalkyl, C₁-C₄-Alkylaryl, unsubstituiertes oder mit Halogen, C₁-C₄-Alkyl- oder C₁-C₄-Alkoxigruppen substituiertes C₆-C₁₀-Aryl, oder einen 5- bis 7-gliedrigen Heterocyclus steht, wobei die Bedeutung der einzelnen Reste wie Alkyl, Alkoxi, Aryl usw. den weiter oben angegebenen Definitionen, einschließlich der dort angegebenen bevorzugten Bereiche, für diese Reste entspricht. Beispielhaft als Reste seien genannt: Acetylamino, Propionylamino, Butyrylamino, Benzoylamino, p-Chlorbenzoylamino, p-Methylbenzoylamino, N-Methylacetamino, N-Methylbenzoylamino, N-Succinimido, N-Phthalimido oder N-(4-Amino)phthalimido;
- -NR¹⁰COOR¹³, wobei R¹³ und R¹⁰ die bereits weiter oben angegebenen Bedeutungen haben. Beispielhaft seien als Reste genannt: -NHCOOCH₃, -NHCOOC₂H₅ und -NHCOOC₆H₅;
- -NR¹⁰CONR¹¹R¹², worin R¹¹, R¹² und R¹⁰ die bereits weiter oben angegebenen Bedeutungen haben. Beispielhaft seien als Reste genannt: Ureido, N-Methylureido, N-Phenylureido oder N,N'-2',4'-Dimethylphenylureido;
- -NHSO₂R¹³, wobei R¹³ die bereits weiter oben angegebene Bedeutung hat. Beispielhaft seien als Reste genannt: Methylsulfonylamino, Phenylsulfonylamino, p-Tolylsulfonylamino oder 2-Naphthylsulfonylamino;
- -SO₂R¹³, wobei R¹³ die bereits weiter oben angegebene Bedeutung hat. Beispielhaft seien als Reste genannt: Methylsulfonyl, Ethylsulfonyl, Phenylsulfonyl, 2-Naphthylsulfonyl;
- -SOR¹³, wobei R¹³ die bereits weiter oben angegebene Bedeutung hat. Beispielhaft sei Phenylsulfoxidyl als Rest genannt;
- -SO₂OR¹³, wobei R¹³ die bereits weiter oben angegebene Bedeutung hat. Beispielhaft seien als Reste R¹³ genannt: Methyl, Ethyl, Phenyl, o-, m- oder p-Chlorphenyl, o-, m- oder p-Methylphenyl, 1- oder 2-Naphthyl;
- -CONR¹¹R¹², worin R¹¹ und R¹² die bereits weiter oben angegebenen Bedeutungen haben. Beispielhaft seien als Reste genannt: Carbamoyl, N-Methylcarbamoyl, N-Ethylcarbamoyl, N-Phenylcarbamoyl, N,N-Dimethylcarbamoyl, N-Methyl-N-phenylcarbamoyl, N-1-Naphthylcarbamoyl oder N-Piperdylcarbamoyl;
- -SO₂NR¹¹R¹², worin R¹¹ und R¹² die bereits weiter oben angegebenen Bedeutungen haben. Beispielhaft seien als Reste genannt: Sulfamoyl, N-Methylsulfamoyl, N-Ethytsulfamoyl, N-Phenylsulfamoyl, N-Methyl-N-phenylsulfamoyl oder N-Morpholylsulfamoyl;
- -N=NR¹⁵, wobei R¹⁵ den Rest einer Kupplungskomponente oder einen gegebenenfalls durch Halogen, Alkyl oder -O-Alkyl substituierten Phenylrest bedeutet, mit den oben angegebenen Bedeutungen für Halogen und Alkyl. In den Definitionen von R¹⁵ vorkommendes Alkyl kann eine der weiter oben als bevorzugt angegebene Anzahl C-Atome haben. Als Beispiele für R¹⁵ seien genannt: die Acetoacetarylid-, Pyrazolyl-, Pyridonyl-, o-, p-Hydroxyphenyl-, o-Hydroxynaphthyl-, p-Aminophenyl- oder p-N,N-Dimethylaminophenyl-Reste.
- -OCOR¹³, wobei R¹³ die bereits weiter oben angegebene Bedeutung hat. Beispielhaft seien als Reste R¹³ genannt: Methyl, Ethyl, Phenyl, o-, m- oder p-Chlorphenyl;
- -OCONHR¹³, wobei R¹³ die bereits weiter oben angegebene Bedeutung hat. Beispielhaft seien als Reste R¹³ genannt: Methyl, Ethyl, Phenyl, o-, m- oder p-Chlorphenyl.

Als Halogen kann man Fluor, Chlor, Brom und Iod, bevorzugt Fluor und Chlor, einsetzen.

Als unsubstituiertes oder substituiertes C₁-C₁₈-Alkyl kann man einsetzen Methyl, Ethyl, n-Propyl, Isopropyl, n-Butyl, i-Butyl, sec-Butyl, tert-Butyl, tert-Amyl, n-Hexyl, 1,1,3,3,-Tetramethylbutyl, n-Heptyl, n-Octyl, n-Nonyl, n-Decyl, n-Undecyl, n-Dodecyl, n-Octadecyl, 3-Pentyl, 4-Heptyl, 5-Nonyl, 6-Undecyl, 7-Tridecyl, 3-Hexyl, 3-Heptyl, 3-Nonyl, 3-Undecyl, bevorzugt C₁-C₁₂-Alkyl wie Methyl, Ethyl, n-Propyl, Isopropyl, n-Butyl, sec-Butyl, tert-Butyl, tert-Amyl, n-Hexyl, n-Heptyl, n-Octyl, n-Nonyl, n-Decyl, n-Undecyl, n-Dodecyl, 3-Pentyl, 4-Heptyl, 5-Nonyl, 6-Undecyl, 7-Tridecyl, 3-Hexyl, 3-Heptyl, 3-Nonyl, 3-Undecyl, besonders bevorzugt C₁-C₈-Alkyl wie Methyl, Ethyl, n-Propyl, Isopropyl, n-Butyl, i-Butyl, sec-Butyl, tert-Butyl, tert-Amyl, n-Hexyl, 1,1,3,3,-Tetramethylbutyl, n-Heptyl, n-Octyl, 3-Pentyl, 4-Heptyl, 3-Hexyl, 3-Heptyl, ganz besonders bevorzugt C₁-C₄-Alkyl wie Methyl, Ethyl, n-Propyl, Isopropyl, n-Butyl, i-Butyl, sec.-Butyl, tert.-Butyl; wobei die genannten Alkylgruppen mit folgenden, in der Regel die Hydrophilie nicht erhöhenden Gruppen substituiert sein können wie Fluor, Hydroxy, Cyano, -OCOR¹³, -OR¹¹, -OCOOR¹³, -CON(R¹¹)(R¹²) oder -OCONHR¹³, worin R¹³ C₁-C₁₈-Alkyl wie Methyl, Ethyl, n-Propyl, Isopropyl, n-Butyl, i-Butyl, sec.-Butyl, tert.-Amyl, n-Hexyl, 1,1,3,3,-Tetramethylbutyl, n-Heptyl, n-Octyl, n-Nonyl, n-Decyl, n-Undecyl, n-Dodecyl, n-Octadecyl, 3-Pentyl, 4-Heptyl, 5-Nonyl, 6-Undecyl, 7-Tridecyl, 3-Hexyl, 3-Heptyl, 3-Nonyl, 3-Undecyl, bevorzugt C₁-C₁₂-Alkyl wie Methyl, Ethyl, n-Propyl, Isopropyl, n-Butyl, sec.-Butyl, tert.-Butyl, tert.-Amyl, n-Hexyl, n-Heptyl, n-Octyl, n-Nonyl, n-Decyl, n-Undecyl, n-Dodecyl, 3-Pentyl, 4-Heptyl, 5-Nonyl, 6-Undecyl, 7-Tridecyl, 3-Hexyl, 3-Heptyl, 3-Nonyl, 3-Undecyl, C₆-C₁₀-Aryl wie Phenyl und Naphthyl, bevorzugt Naphthyl, oder unsubstituiertes oder durch Halogen wie Chlor und Fluor, bevorzugt Fluor, C₁-C₄-Alkyl oder -O-C₁-C₄-Alkyl substituiertes Benzyl oder einen fünf- bis siebengliedrigen heterocyclischen Rest wie Pyridyl, Pyrimidyl, Pyrazinyl, Triazinyl, Furanyl, Pyrrolyl, Thiophenyl, Chinolyl, Isochinolyl, Coumarinyl, bedeutet, und
R¹¹ und R¹² stehen für Wasserstoff, unsubstituiertes oder durch die Cyano- oder. Hydroxi-Gruppe substituiertes C₁-C₁₈-Alkyl wie bereits oben genannt, bevorzugt C₁-C₁₂-Alkyl, besonders bevorzugt C₁-C₈-Alkyl, ganz besonders bevorzugt C₁-C₄-Alkyl wie bereits weiter oben genannt, C₃- bis C₂₄-Cycloalkyl, bevorzugt C₅-, C₆-, C₁₂-, C₁₅-, C₁₆-, C₂₀- und C₂₄-Cycloalkyl, Aryl oder Heteroaryl, bevorzugt abgeleitet von den oben genannten carbo- und heterocyclischen aromatischen Resten, insbesondere unsubstituiertes oder durch Halogen, C₁-C₄-Alkyl oder C₁-C₄-Alkoxi substituiertes Phenyl bedeuten, oder worin R¹¹ und R¹² zusammen mit mindestens einem der anderen Reste R² bis R⁹ einen 5- bis 6-gliedrigen Ring oder auch Heteroring bilden beispielsweise einen Pyridin-, Pyrrol-, Furan- oder Pyranring.

In einer weiteren bevorzugten Ausführungsform verwendet man als Substituenten an den Alkylgruppen mono- oder dialkylierte Aminogruppen, Arylreste wie Naphthyl oder insbesondere unsubstituiertes oder durch Halogen, Alkyl oder -O-Alkyl substituiertes Phenyl, oder ferner heterocyclische aromatische Reste wie 2-Thienyl, 2-Benzoxazolyl-, 2-Benzthiazolyl-, 2-Benzimidazolyl-, 6-Benzimidazolonyl-, 2-, 3- oder 4-Pyridinyl-, 2-, 4-, oder 6-Chinolyl- oder 1-, 3-, 4-, 6-, oder 8-Isochinotylreste.
Enthalten die genannten Substituenten ihrerseits wieder Alkyl, so kann dieses Alkyl verzweigt oder unverzweigt sein und vorzugsweise 1 bis 18, insbesondere 1 bis 12, vor allem 1 bis 8 und besonders bevorzugt 1 bis 4 C-Atome enthalten. Beispiele von unsubstituierten Alkylgruppen sind Methyl, Ethyl, n-Propyl, Isopropyl, n-Butyl, sec.-Butyl, tert.-Butyl, tert.-Amyl, n-Hexyl, 1,1,3,3,-Tetramethylbutyl, n-Heptyl, n-Octyl, n-Nonyl, n-Decyl, n-Undecyl, n-Dodecyl, n-Octadecyl, 3-Pentyl, 4-Heptyl, 5-Nonyl, 6-Undecyl, 7-Tridecyl, 3-Hexyl, 3-Heptyl, 3-Nonyl, 3-Undecyl, Beispiele von substituierten Alkylgruppen sind Hydroxymethyl, 2-Hydroxyethyl, Trifluormethyl, Trifluoroethyl, Cyanomethyl, Methoxycarbonylmethyl, Acetoxymethyl oder Benzyl.

Im Rest -OR¹⁰ kann man für R¹⁰ einsetzen: Wasserstoff, C₁-C₁₈-Alkyl wie für R¹³ bereits definiert, einschließlich der bevorzugten dort genannten Varianten. Beispielhaft als bevorzugte Reste für R¹⁰ seien genannt: Methyl, Ethyl, n-Propyl, Isopropyl, n-Butyl, sec.- Butyl, tert.-Butyl, tert.-Amyl, n-Hexyl, 1,1,3,3,-Tetramethylbutyl, n-Heptyl, n-Octyl, n-Nonyl, n-Decyl, n-Undecyl, n-Dodecyl, n-Octadecyl, 3-Pentyl, 4-Heptyl, 5-Nonyl, 6-Undecyl, 7-Tridecyl, 3-Hexyl, 3-Heptyl, 3-Nonyl, 3-Undecyl, Hydroxymethyl, 2-Hydroxyethyl, Trifluormethyl, Trifluoroethyl, Cyanomethyl, Methoxycarbonylmethyl, Acetoxymethyl, Benzyl, Phenyl, o-, m- oder p-Chlorphenyl, o-, m-, oder p-Methylphenyl, 1- oder 2-Naphthyl, Cyclopentyl, Cyclohexyl, Cyclododecyl, Cyclopentadecyl, Cyclohexadecyl, Cycloeicosanyl, Cyclotetracosanyl, Thienyl und Pyranylmethyl. Beispielhaft als bevorzugte Reste seien genannt Hydroxi, Methoxi, -O-Ethyl, -O-i-Propyl-, -O-i-Butyl, -O-Phenyl, -O-2,5-Di-tert.-butylphenyl.

In -NR¹¹R¹² kann man für R¹¹ und R¹² die bereits oben definierten Reste einsetzen. Beispielhaft als bevorzugte Reste seien genannt: Amino, Methylamino, Dimethylamino, Ethylamino, Diethylamino, Isopropylamino, 2-Hydroxyethylamino, 2-Hydroxypropylamino, N,N-Bis(2-hydroxyethyl)amino, Cyclopentylamino, Cyclohexylamino, Cyclododecylamino, Cyclopentadecylamino, Cyclohecadecylamino, Cycloeicosanylamino, Cyclotetracosanylamino, Phenylamino, N-Methylphenylamino, Benzylamino, Dibenzylamino, Piperidyl oder Morpholyl, besonders bevorzugt sind Dimethylamino, Diethylamino, Di-n-propylamino, Di-n-butylamino, Di-n-pentylamino, Di-n-hexylamino, Di-n-heptylamino, Di-n-octylamino, Din-dodecylamino.

R¹¹ und R¹² können gemeinsam oder gegebenenfalls zusätzlich zusammen mit jeweils mindestens einem der anderen Reste aus der Menge R², R³, R⁴, R⁵, R⁶, R⁷, R⁸, R⁹ einen oder mehrere fünf- oder sechs-gliedrige carbocyclische oder heterocyclische, gesättigte oder ungesättigte Ringe bilden wie Pyridin-, Pyrrol-, Piperidin-, Chinolin- oder Benzochinolizin-Derivate.

Als -COR¹³ kann man solche Reste einsetzen, in denen R¹³ die weiter oben angegebene Bedeutung hat. Beispielhaft als bevorzugte Reste R¹³ seien genannt: Methyl, Ethyl, n-Propyl, Isopropyl, n-Butyl, sec.- Butyl, tert.-Butyl, tert.-Amyl, n-Hexyl, 1,1,3,3,-Tetramethylbutyl, n-Heptyl, n-Octyl, n-Nonyl, n-Decyl, n-Undecyl, n-Dodecyl, n-Octadecyl, 3-Pentyl, 4-Heptyl, 5-Nonyl, 6-Undecyl, 7-Tridecyl, 3-Hexyl, 3-Heptyl, 3-Nonyl, 3-Undecyl, Hydroxymethyl, 2-Hydroxyethyl, Trifluormethyl, Trifluoroethyl, Cyanomethyl, Methoxycarbonylmethyl, Acetoxymethyl, Benzyl, Phenyl, o-, m- oder p-Chlorphenyl, o-, m-, oder p-Methylphenyl, 1- oder 2-Naphthyl, Cyclopentyl, Cyclohexyl, Cyclododecyl, Cyclopentadecyl, Cyclohexadecyl, Cycloeicosanyl, Cyclotetracosanyl, Thienyl, Pyranylmethyl und Furfuryl.

Als -NR¹⁴COR¹³ kann man solche Reste einsetzen, in denen R¹³ die weiter oben angegebene Bedeutung hat, und R¹⁴ für Wasserstoff, unsubstituiertes oder mit Cyano-, Hydroxi- oder C₁-C₄-Alkoxicarbonyl-Gruppen substituiertes C₁-C₁₈-Alkyl, C₃- bis C₂₄-Cycloalkyl, C₁-C₄-Alkylaryl, unsubstituiertes oder mit Halogen, C₁-C₄-Alkyl- oder C₁-C₄-Alkoxigruppen substituiertes C₆-C₁₀-Aryl, oder einen 5- bis 7-gliedrigen Heterocyclus steht, wobei die Bedeutung der einzelnen Reste wie Alkyl, Alkoxi, Aryl usw. den weiter oben angegebenen Definitionen, einschließlich der dort angegebenen bevorzugten Bereiche, für diese Reste entspricht wie o-, m- oder p-Chlorphenyl, o-, m- oder p-Methylphenyl, 1- oder 2-Naphthyl, Cyclopentyl, Cyclohexyl, Cyclododecyl, Cyclopentadecyl, Cyclohexadecyl, Cycloeicosanyl,Cyclotetracosanyl, Thienly, Pyranylmethyl, Benzyl oder Furfuryl. Beispielhaft als Reste seien genannt: Acetylamino, Propionylamino, Butyrylamino, Benzoylamino, p-Chlorbenzoylamino, p-Methylbenzoylamino, N-Methylacetamino, N-Methylbenzoylamino, N-Succinimido, N-Phthalimido oder N-(4-Amino)phthalimido.

Als -NR¹⁰COOR¹³ kann man solche Reste einsetzen, in denen R¹³ und R¹⁰ die bereits weiter oben angegebenen Bedeutungen haben. Beispielhaft seien als Reste genannt:
-NHCOOCH₃, -NHCOOC₂H₅ und -NHCOOC₆H₅.

Als -NR¹⁰CONR¹¹R¹² kann man solche Reste einsetzen, in denen R¹¹, R¹² und R¹⁰ die bereits weiter oben angegebenen Bedeutungen haben. Beispielhaft seien als Reste genannt: Ureido, N-Methylureido, N-Phenylureido oder N,N'-2',4'-Dimethylphenylureido.

Als -NHSO₂R¹³ kann man solche Reste einsetzen, in denen R¹³ die weiter oben angegebene Bedeutung hat. Beispielhaft seien als Reste genannt: Methylsulfonylamino, Phenylsulfonylamino, p-Tolylsulfonylamino oder 2-Naphthylsulfonylamino.

Als -SO₂R¹³ kann man solche Reste einsetzen, in denen R¹³ die weiter oben angegebene Bedeutung hat. Beispielhaft seien als Reste genannt: Methylsulfonyl, Ethylsulfonyl, Phenylsulfonyl, 2-Naphthylsulfonyl.

Als -SOR¹³ kann man solche Reste einsetzen, in denen R¹³ die weiter oben angegebene Bedeutung hat. Beispielhaft sei Phenylsulfoxidyl als Rest genannt.

Als -SO₂OR¹³ kann man solche Reste einsetzen, in denen R¹³ die weiter oben angegebene Bedeutung hat. Beispielhaft seien als Reste R¹³ genannt: Methyl, Ethyl, Phenyl, o-, m- oder p-Chlorphenyl, o-, m- oder p-Methylphenyl, 1- oder 2-Naphthyl.

Als -CONR¹¹R¹² kann man solche Reste einsetzen, in denen R¹¹ und R¹² die bereits weiter oben angegebenen Bedeutungen haben. Beispielhaft seien als Reste genannt: Carbamoyl, N-Methylcarbamoyl, N-Ethylcarbamoyl, N-Phenylcarbamoyl, N,N-Dimethylcarbamoyl, N-Methyl-N-phenylcarbamoyl, N-1-Naphthylcarbamoyl oder N-Piperidylcarbamoyl.

Als -SO₂NR¹¹R¹² kann man solche Reste einsetzen, in denen R¹¹ und R¹² die bereits weiter oben angegebenen Bedeutungen haben. Beispielhaft seien als Reste genannt: Sulfamoyl, N-Methylsulfamoyl, N-Ethylsulfamoyl, N-Phenylsulfamoyl, N-Methyl-N-phenylsulfamoyl oder N-Morpholylsulfamoyl.

Als -N=NR¹⁵ kann man solche Reste einsetzen, in denen R¹⁵ den Rest einer Kupplungskomponente oder einen gegebenenfalls durch Halogen, Alkyl oder -O-Alkyl substituierten Phenylrest bedeutet, mit den oben angegebenen Bedeutungen für Halogen und Alkyl. In den Definitionen von R¹⁵ vorkommendes Alkyl kann eine der weiter oben als bevorzugt angegebene Anzahl C-Atome haben. Als Beispiele für R¹⁵ seien genannt: die Acetoacetarylid-, Pyrazolyl-, Pyridonyl-, o-, p-Hydroxyphenyl-, o-Hydroxynaphthyl-, p-Aminophenyl- oder p-N,N-Dimethylaminophenyl-Reste.

Als -OCOR¹³ kann man solche Reste einsetzen, in denen R¹³ die weiter oben angegebene Bedeutung hat. Beispielhaft seien als Reste R¹³ genannt: Methyl, Ethyl, Phenyl, o-, m- oder p-Chlorphenyl.

Als -OCONHR¹³ kann man solche Reste einsetzen, in denen R¹³ die weiter oben angegebene Bedeutung hat. Beispielhaft seien als Reste R¹³ genannt: Methyl, Ethyl, Phenyl, o-, m- oder p-Chlorphenyl.

Besonders bevorzugte Perylenhydrazid-imide I sind solche in denen R², R³, R⁴, R⁵, R⁶, R⁷, R⁸ und R⁹ für Wasserstoff stehen, und R¹ einen sekundären Alkylrest bedeutet wie 1-(C₁-C₉alkyl)-C₂-C₁₀alkyl, insbesondere solche, in denen der Rest R¹ eine "Schwalbenschwanz-Struktur" aufweist wie 1-Methyl-ethyl, 1-Ethyl-n-propyl, 1-n-Propyl-n-butyl, 1-n-Butyl-n-pentyl, 1-n-Hexyl-1-heptyl, 1-n-Heptyl-1-n-octyl, 1-n-Octyl-1-n-nonyl, 1-n-Nonyt-1-decyl, aber auch aromatische Reste, insbesondere Phenylreste, ganz besonders bevorzugt C₁-C₆Alkylsubstituiertes Phenyl wie 2,6-Di-tert.-butylphenyl und 2,5-Di-tert.-butylphenyl.

Insbesondere die Verbindungen mit R¹ = 1-n-Butyl-n-pentyl, 1-n-Hexyl-1-heptyl, 1-n-Heptyl-1-n-octyl, 1-n-Octyl-1-n-nonyl, 1-n-Nonyl-1-decyl und 2,5-Di-tert.-butylphenyl zeichnen sich durch ihre gute Löslichkeit aus, wobei die Löslichkeit mit wachsender Kettenlänge des sec.-Alkylrestes steigt, die Verbindung mit dem 2,5-Di-tert.-butylphenylrest dagegen ist deutlich geringer löslich als die Alkylverbindungen. Der Schmelzpunkt der sek.-Alkylverbindungen sinkt mit steigender Kettenlänge. Die molaren Extinktionskoeffizienten liegen im Bereich um 80.000, insbesondere das 2,5-Di-tert.-butylphenylderivat hat einen molaren Extinktionskoeffizienten von 84.500.

Bezeichnenderweise weisen die erfindungsgemäßen Perylenderivate I keine Fluoreszenz in Lösung auf. Bislang bei einigen Versuchen beobachtete äußerst intensitätsschwache Fluoreszenz könnte mit sehr großer Wahrscheinlichkeit auf geringste Spuren von Beiprodukten zurückzuführen sein, deren Gehalt erheblich unter der sonst üblichen Nachweisgrenze liegt. Möglicherweise könnte dies darauf zurückzuführen sein, daß nach der optischen Anregung eine Elektronenübertragung von der freien Aminogruppe auf den Perylenchromophor erfolgt, die zu einer Fluoreszenzlöschung führt. Ein Indiz hierfür könnte sein, daß durch Protonierung oder Acylierung eine starke Fluoreszenz induziert wird, denn die Elektronenübertragung wird dadurch behindert.

Die erfindungsgemäßen Perylenhydrazid-imide I erhält man bevorzugt durch Umsetzung von Perylenanhydridimiden der allgemeinen Formel V 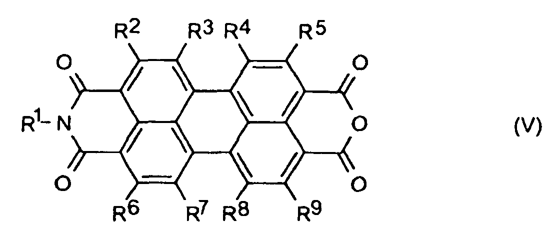 mit Hydrazin oder Hydrazin-lieferenden Verbindungen wie Hydrazinhydrat oder Hydrazin-Addukte wie Hydrazin-Sulfat, Hydrazin-mono- oder -di-hydrochlorid, Hydrazin-phosphat, bevorzugt Hydrazinhydrat.

Vorzugsweise nimmt man die Umsetzung bei Reaktionstemperaturen im Bereich von 80 bis 200, besonders bevorzugt von 100 bis 130°C vor. Der Erfolg der Umsetzung ist nach bisherigen Beobachtungen nicht von der Wahl des Druckbereiches abhängig. Der Einfachheit halber führt man üblicherweise die Umsetzung bei Atmosphärendruck durch, jedoch können auch niedrigere Drücke von bis zu 10 kPa oder Drücke bis zu 10 MPa gewählt werden. Die Reaktionszeiten wählt man, je nach gewählter Reaktionstemperatur, bevorzugt im Bereich von 30 min bis 1 h. Des weiteren nimmt man bevorzugt die Umsetzung in Gegenwart eines basischen organischen Lösungsmittels, bevorzugt eines stickstoffhaltigen Heterocyclus wie Imidazol, Chinolin, Pyridin, Picolin, besonders bevorzugt Imidazol, oder eines Glykols wie Ethylenglykol oder Diethylenglykol, vor.

In einer bevorzugten Ausführungsform nimmt man die Umsetzung in einer Schutzgasatmosphäre vor. Als Schutzgas kommen beispielsweise Stickstoff und die Edelgase wie Helium oder Argon in Betracht.

Hydrazin, bzw. Hydrazin-liefernde Verbindungen, setzt man in der Regel im Überschuß, bevorzugt in zwei- bis zehnfachem Überschuß, besonders bevorzugt in zwei- bis dreifachem Überschuß, bezogen auf das Perylenanhydridimid V, ein.
Perylenanhydridimide V sind bekannt oder können nach bekannten Methoden beispielsweise aus den entsprechenden Bisanhydriden hergestellt werden. Einige Verbindungen sind z.B. in Chem.Ber. 124 (1991) 529 beschrieben.

Des weiteren kann es vorteilhaft sein, die Umsetzung in Gegenwart von Zinkverbindungen, insbesondere wasserlöslichen Zinksalzen wie Zinkacetat und Zinkchlorid durchzuführen.

Üblicherweise wählt man dabei das Molverhältnis von Perylenhydrazid-imid I zu Zinkverbindung im Bereich von 10:1 bis 1:1, vorzugsweise von 2:1.

Die erfindungsgemäßen Perylenderivate I kann man mit üblichen Methoden wie die Chromatographie oder extraktive Umkristallisation reinigen und isolieren. In der Regel lassen sich danach die Perylenderivate I direkt für weitere Umsetzungen verwenden, insbesondere weil die Perylenderivate I üblicherweise frei von fluoreszierenden Nebenprodukten sind.

Zur Darstellung von analysenreinen Proben können die Perylenderivate I noch aus Lösungsmitteln wie Cyclohexan extraktiv umkristallisiert werden. Unter Umständen können dabei aber in sehr geringer Menge fluoreszierende Zersetzungsprodukte entstehen. Diese sind zwar für die Elementaranalyse und die Bestimmung von Extinktionskoeffizienten im allgemeinen völlig unerheblich, sie können aber wegen ihrer unter Umständen ausgeprägten Fluoreszenz stören, wenn man die Perylenderivate I als Carbonylreagenzien einsetzen möchte. Besonders bevorzugt ist daher, die Perylenderivate I nur mittels Chromatographie zu reinigen.

Die vorliegende Erfindung betrifft ferner ein weiteres Herstellungsverfahren für die Perylen-derivate 1, wobei man Perylen-3,4:9,10-tetracarbonsäurebisimide der allgemeinen Formel VI 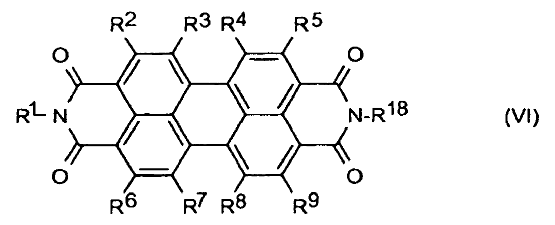 wobei R¹⁸ die gleiche Bedeutung wie R¹ hat, jedoch nicht notwendigerweise R¹ und R¹⁸ gleichzeitig die gleichen Substituenten tragen müssen, der Hydrazinolyse unterwirft. Perylen-3,4:9,10-tetracarbonsäure-bisimide der Formel VI sind bekannt oder können nach bekannten Methoden beispielsweise aus den entsprechenden Bisanhydriden oder Perylenanhydridimiden hergestellt werden.

Bevorzugte Bisimide VI sind solche in denen R¹ für einen aliphatischen Rest wie bereits definiert steht, insbesondere für einen sekundären Alkylrest wie 1-(C₁-C₉alkyl)-C₂-C₁₀alkyl, vorzugsweise hat R¹ eine "Schwalbenschwanz-Struktur" realisierbar mit Resten wie 1-Methyl-ethyl, 1-Ethyl-n-propyl, 1-n-Propyl-n-butyl, 1-n-Butyl-n-pentyl, 1-n-Hexyl-1-n-heptyl, 1-n-Heptyl-1-n-octyl, 1-n-Octyl-1-n-nonyl, 1-n-Nonyl-1-n-decyl, und R¹⁸ für einen aromatischen Rest, bevorzugt einen carbocyclischen aromatischen Rest wie für R¹ bereits definiert, steht. Besonders bevorzugt steht R¹⁸ für C₆-C₁₀Aryl wie Phenyl oder Naphthyl, ganz besonders bevorzugt für Phenyl. Stellvertretend sei die Verbindung der Formel (VIa) 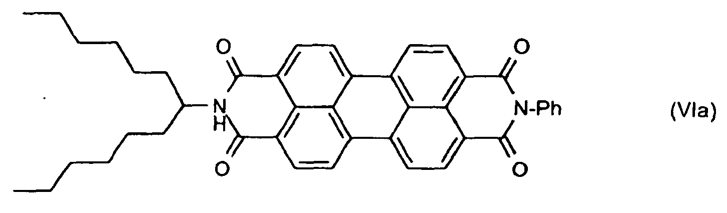 genannt.

Bei der Hydrazinolyse wird bevorzugt der aromatische Rest durch die -NH₂-Gruppe ersetzt.

Die Umsetzung kann stöchiometrisch erfolgen. Üblicherweise nimmt man sie mit einem Überschuß, wobei vorzugsweise das molare Verhältnis von Verbindung VI zu Hydrazin 1:10 bis 1:100 beträgt, an Hydrazin oder einer Hydrazin-liefernden Verbindung wie bereits genannt, bevorzugt Hydrazinhydrat, vor. Die Reaktionstemperatur wählt man üblicherweise in einem Bereich von 50 bis 100°C, als Reaktionsdruck wählt man zweckmäßigerweise Atmosphärendruck. In einer bevorzugten Ausführungsform führt man die Hydrazinolyse in einem Lösungsmittel wie hochsiedende Amine, beispielsweise Chinolin, Imidazol, oder tertiären Alkoholen, bevorzugt tert.-Butylalkohol durch. Die Reaktionszeit beträgt im allgemeinen 4 bis 20 Stunden. Zur Aufarbeitung behandelt man in der Regel das Reaktionsgemisch mit einem Überschuß an Wasser während 1 bis 4 Stunden. Gewünschtenfalls kann man das erhaltene Produkt von den Lösungsmitteln z.B. durch Filtration befreien, mit Wasser waschen und beispielsweise bei einer Temperatur im Bereich von 90 bis 140°C trocknen, sowie durch Chromatographie weiterreinigen.
Eine weitere Ausgestaltung der vorliegenden Erfindung betrifft die fluoreszierenden Perylenhydrazone der allgemeinen Formel (II) 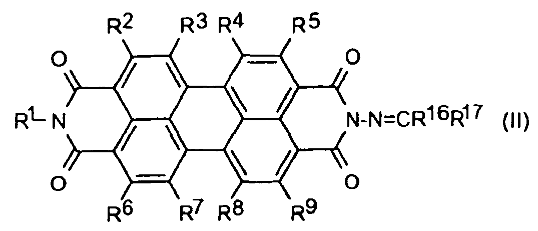
wobei die Reste R¹ bis R⁹ die gleiche Bedeutung wie bereits definiert haben, und R¹⁶ und R¹⁷ gleich oder verschieden sind und die gleiche Bedeutung wie die Reste R² bis R⁹ haben.

Bevorzugte Perylenhydrazone II sind solche, in denen R², R³, R⁴, R⁵, R⁶, R⁷, R⁸ und R⁹ für Wasserstoff stehen, und R¹ einen sekundären Alkylrest bedeutet wie 1-(C₁-C₉alkyl)-C₂-C₁₀alkyl, insbesondere solche, in denen der Rest R¹ eine "Schwalbenschwanz-Struktur" aufweist wie 1-Methyl-ethyl, 1-Ethyl-n-propyl, 1-n-Propyl-n-butyl, 1-n-Butyl-n-pentyl, 1-n-Hexyl-1-heptyl, 1-n-Heptyl-1-n-octyl, 1-n-Octyl-1-n-nonyl, 1-n-Nonyl-1-decyl, aber auch aromatische Reste, insbesondere Phenylreste, ganz besonders bevorzugt C₁-C₆Alkylsub-stituiertes Phenyl wie 2,6-Di-tert.-butylphenyl und 2,5-Di-tert.-butylphenyl, und R¹⁶ und R¹⁷ gleich oder verschieden für unsubstituiertes oder substituiertes C₁-C₁₈Alkyl wie Methyl, Ethyl, n-Propyl, Isopropyl, n-Butyl, i-Butyl, sec.-Butyl, tert.-Butyl, tert.-Amyl, n-Hexyl, 1,1,3,3,-Tetramethylbutyl, n-Heptyl, n-Octyl, n-Nonyl, n-Decyl, n-Undecyl, n-Dodecyl, n-Octadecyl, 3-Pentyl, 4-Heptyl, 5-Nonyl, 6-Undecyl, 7-Tridecyl, 3-Hexyl, 3-Heptyl, 3-Nonyl, 3-Undecyl, bevorzugt C₁-C₁₂-Alkyl wie Methyl, Ethyl, n-Propyl, Isopropyl, n-Butyl, sec.-Butyl, tert.-Butyl, tert.-Amyl, n-Hexyl, n-Heptyl, n-Octyl, n-Nonyl, n-Decyl, n-Undecyl, n-Dodecyl, 3-Pentyl, 4-Heptyl, 5-Nonyl, 6-Undecyl, 7-Tridecyl, 3-Hexyl, 3-Heptyl, 3-Nonyl, 3-Undecyl, besonders bevorzugt C₁-C₈-Alkyl wie Methyl, Ethyl, n-Propyl, Isopropyl, n-Butyl, i-Butyl, sec.-Butyl, tert.-Butyl, tert.-Amyl, n-Hexyl, 1,1,3,3,-Tetramethylbutyl, n-Heptyl, n-Octyl, 3-Pentyl, 4-Heptyl, 3-Hexyl, 3-Heptyl, und Chlormethyl; C₂-C₈Alkenyl wie Ethenyl, n-Propenyl, i-Propenyl, n-But-1-enyl, 2-Methyl-prop-1-enyl, n-Pent-1-enyl, n-Hex-1-enyl, n-Hept-1-enyl und 1-Oct-1-enyl, bevorzugt 2-Methyl-prop-1-enyl; unsubstituiertes oder mit C₁-C₄-Alkoxi substituiertes C₆-C₁₀-Aryl wie Phenyl, Naphthyl, 4-Methoxy-phenyl, Cylopentyl, Cyclohexyl, Furan-2-yl, oder Tetrahydrofuran-2-yl stehen, insbesondere können R¹⁶ und R¹⁷ gemeinsam mit ihrem sie verbindenden Kohlenstoffatom einen fünf- oder sechsgliedrigen Ring wie Cyclopentyl- oder Cyclohexylring bilden, insbesondere bevorzugt stehen R¹⁶ für Phenyl, 4-Methoxy, Furan-2-yl, Chlormethyl, Methyl, n-Butyl, n-Hexyl, 2-Methyl-prop-1-enyl, und R¹⁷ für Wasserstoff, Methyl und Ethoxy.

Die erfindungsgemäßen Perylenhydrazone II erhält man bevorzugt durch Umsetzung eines Perylenimids I mit einer Carbonylverbindung, R¹⁶R¹⁷C=O.

Als Carbonylverbindungen kommen im Prinzip alle Carbonylverbindungen in Betracht, die mit der NNH₂-Gruppe des Perylenhydrazid-imids I Schiff'sche Basen bilden können, vorzugsweise aliphatische Ketone wie Cyclohexanon, α,β-ungesättigte Ketone wie Mesityloxid, Aldehyde, insbesondere aromatische Aldehyde wie Acetaldehyd, n-Pentanal, n-Octanal, oder Ester wie Chlorameisensäureethylester, Chlorameisensäuremethylester, besonders bevorzugt sind solche Carbonylverbindungen, in denen R¹⁶ und R¹⁷ die oben definierten Reste aufweisen.

Das Molverhältnis von Perylenhydrazid-imid I zu Carbonylverbindung wählt man in der Regel im Bereich von 10:1 bis 0,1:1.

Die Umsetzung führt man in der Regel bei einer Temperatur im Bereich von 20 bis 150°C, vorzugsweise von 40 bis 100, besonders bevorzugt von 50 bis 75°C durch. In einer ganz besonders bevorzugten Ausführungsform führt man die Umsetzung in 55 bis 65, insbesondere in bei Atmosphärendruck siedendem (ca. 60°C) Chloroform durch.

Gegebenenfalls kann man die Umsetzung in einem der üblichen, die Umsetzung nicht beeinträchtigenden inerten Lösungsmittel wie chlorierte Kohlenwasserstoffe z.B. Chloroform oder 1,1,2,2-Tetrachlorethan oder Tetrahydrofuran durchführen. Die Menge an Lösungsmittel ist dabei in der Regel nicht kritisch.

Die Reaktionsdauer hängt im allgemeinen in erster von der gewählten Reaktionstemperatur ab und liegt bevorzugt im Bereich von 5 Minuten bis 60 Minuten.

Die Reinigung und Isolierung des Produktes erfolgt bevorzugt durch Chromatographie.
Die UV/Vis-Spektren der Perylenhydrazone (II) ähneln im allgemeinen sehr stark denen der bekannten Perylenfarbstoffe. Die Absorptions- und Fluoreszenzbanden sind nach bisherigen Beobachtungen im üblichen Wellenlängenbereich, und man findet in der Regel Extinktionskoeffizienten von 87.000 bis 92.000.

Die Gleichartigkeit der UV/Vis-Spektren kann man in einer weiteren Ausführungsform der vorliegenden Erfindung für analytische Zwecke ausnutzen, da unabhängig von der Derivatisierung in der Regel für beliebige Carbonylverbindungen Messungen im selben Spektralbereich möglich sind.

Daher betrifft eine weitere Ausführungsform der vorliegenden Erfindung ein Verfahren zum Nachweis von Carbonylverbindungen durch Umsetzung einer Carbonylverbindung mit einem Hydrazid, wobei man ein erfindungsgemäßes Perylenhydrazid-imid I mit einer Carbonylverbindung R¹⁶R¹⁷C=O zur Reaktion bringt und das entstandene Perylenhydrazon II spektroskopisch, bevorzugt fluoreszenzspektroskopisch, oder chromatographisch analysiert.

Des weiteren betrifft die vorliegende Erfindung die Verwendung von Perylenhydrazid-imiden I als Nachweisreagenz für Carbonylverbindungen.

In einer besonders bevorzugten Ausführungsform werden für die Nachweismethode besonders reine Perylenhydrazid-imide I eingesetzt. Ferner ist es besonders vorteilhaft, wenn man zusätzlich die Extinktionskoeffizienten exakt bestimmt und durch unterschiedliche Konzentrationen entsprechende Eichkurven ermittelt. So erzielt man beispielsweise die besten Resultate für die Rein-Darstellung der Perylenhydrazone II, wenn man die Carbonylverbindungen in Substanz umsetzt und dann die überschüssige Carbonyl-verbindung destillativ entfernt. Auf diese Weise sind in der Regel Derivate von aliphatischen Ketonen wie Cyclohexanon, von Aldehyden, von α,β-ungesättigten Ketonen wie Mesityloxid sowie von aromatischen Aldehyden wie Benzaldehyd und Anisaldehyd erhältlich.

Üblicherweise sieht man eine Fluoreszenz als positiven Nachweis für Aldehyde und Ketone bereits nach wenigen Minuten, insbesondere erkennt man die Fluoreszenz besonders gut durch einen visuellen Vergleich mit einer Blindprobe, zweckmäßigerweise unter Zuhilfenahme einer handelsüblichen UV-Fluoreszenzlampe (Linien der Quecksilberdampf-lampe bei 365 nm). Durch eine Verlängerung der Reaktionszeit auf beispielsweise 1h läßt sich im allgemeinen die Umsetzung vervollständigen.

Bevorzugt sollten alle Reagenzien säurefrei sein, da durch eine Protonierung in der Regel ebenfalls eine Fluoreszenz induziert wird, es sei denn man möchte gerade Protonen nachweisen. Eine weitere Ausführungsform der vorliegenden Erfindung betrifft daher ein Nachweis-verfahren für Protonensäuren, indem man ein Perylenhydrazid-imid I mit einer Protonen-säure in Kontakt bringt und das Reaktionsprodukt mittels Fluoreszenzspektroskopie oder Chromatographie analysiert. Bevorzugte Protonensäure sind Mineralsäuren wie Salzsäure, Schwefelsäure, Salpetersäure, ferner Sulfonsäuren wie Methansulfonsäure, Benzolsulfonsäure, Toluolsulfonsäure sowie aliphatische, aromatische oder mehrwertige Carbonsäuren wie Essigsäure, Trifluoressigsäure, Benzoesäure oder Zitronensäure.

Des weiteren ist es vorteilhaft für den Nachweis von Carbonylverbindungen, beziehungs-weise Protonensäuren, daß die eingesetzten Substanzen frei von Acylierungsmittel wie Säurechloride oder Säureanhydride sind, da diese im allgemeinen ebenfalls mit den erfindungsgemäßen Perylenhydrazid-imiden I reagieren können. Eine weitere Ausführungs-form der vorliegenden Erfindung betrifft daher ein Nachweisverfahren für Acylierungsmittel, indem man ein Perylenhydrazid-imid I mit einem Acylierungsmittel in Kontakt bringt und das Reaktionsprodukt mittels Chromatographie oder Fluoreszenzspektroskopie analysiert.

In einer bevorzugten Ausführungsform, die den Nachweis von Carbonylverbindungen betrifft, hydrolysiert man gegebenenfalls vorhandene Acylierungsmittel in an sich bekannter Art und Weise vor dem qualitativen Nachweis der Carbonylverbindungen, falls sie im Gemisch mit Aldehyden oder Ketonen vorliegen.

Des weiteren wurde gefunden, daß beim qualitativen Nachweis auf Carbonylverbindungen Carbonsäureester nicht stören, da sie mit den Perylenhydrazid-imiden I langsamer als Aldehyde und Ketone reagieren.

Die in den erfindungsgemäßen Nachweisverfahren gebildeten Perylenhydrazone II können vorzugsweise chromatographisch, insbesondere dünnschichtchromatographisch oder mittels HPLC (High Pressure Liquid Chromatography) in der Regel mit hoher Nachweisempfindlichkeit über ihre R_{f}-Wert identifiziert werden. Es wurde ferner gefunden, daß auf dünnschichtchromatographischem Wege auch der gleichzeitige Nachweis von mehreren Carbonylverbindungen in komplexen Gemischen möglich ist. Dies könnte z.B. für die Isolierung neuer Naturstoffe von Interesse sein. Die vorliegende Erfindung betrifft daher auch ein Verfahren zum gleichzeitigen Nachweis von mehr als einer Carbonylverbindung in einem Gemisch, indem man das die Carbonylverbindungen enthaltende Gemisch mit einem Perylenhydrazid-imid I zur Reaktion bringt, und das Reaktionsgemisch chromatographisch aufarbeitet.

Des weiteren wurde gefunden, daß ein Ansteigen der Fluoreszenzintensität mit steigendem Anteil an Carbonylverbindung zu beobachten ist, wenn man Aldehyde und Ketone im Unterschuß, bezogen auf das Perylenhydrazid-imid I einsetzt. Mittels Eichkurven kann man die Quantität der entsprechenden Carbonylverbindungen, bzw. Protonensäuren und Acylierungsmittel, bestimmen. Bevorzugt setzt man das erfindungsgemäße quantitative Nachweisverfahren bei nicht-flüchtigen Aldehyden und Ketonen ein. Eine weitere Ausführungsform der vorliegenden Erfindung betrifft daher die quantitative Bestimmung von Carbonylverbindungen, Protonensäuren und Acylierungsmitteln, indem man die Fluoreszenzintensität der jeweilig entstandenen Perylenhydrazone II bestimmt.

Schließlich wurde gefunden, daß die erfindungsgemäßen Perylenderivate I und II mit Metallsalzen wie den Nitraten, Chloriden, Sulfaten und Perchloraten von Magnesium und Aluminium stabile, farbige Komplexe bilden. Weitere Ausführungsformen der vorliegenden Erfindung betreffen daher Metallkomplexe, erhältlich durch Umsetzung eines Metallsalzes mit Perylenhydrazid-imid I oder Perylenhydrazon II, ein Verfahren zum Nachweis von Metallsalzen, die Verwendung der erfindungsgemäßen Perylenderivate I und II zum Nachweis von Metallionen, ein Verfahren zur Herstellung von Metallkomplexen mit den Perylenderivaten I und II, und die Verwendung der Perylenderivate I und II zur Herstellung von metallhaltigen Farbmitteln, insbesondere die Verwendung des Perylenhydrazons II zur Herstellung von fluoreszierenden metallhaltigen Farbmitteln.

Eine weitere Ausführungsform betrifft Formamide der Formel Ia

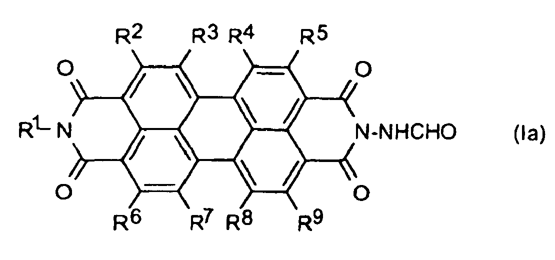

Die Formamide Ia erhält man bevorzugt durch Umsetzung der Perylenhydrazid-imide I mit Ameisensäure, insbesondere wasserfreier Ameisensäure, oder Ameisensäurederivaten, insbesondere Ameisensäure-C₁-C₄Alkyl- und C₆-C₁₀Arylester wie Ameisensäuremethylester, Ameisensäureethylester, Ameisensäure-n-propylester, Ameisensäure-n-butylester, Ameisensäurephenyl, oder gemischten Ameisensäureanhydride wie Formylfluorid, Formylacetat oder Formylbenzoat, besonders bevorzugt ist wasserfreie Ameisensäure.

Die Menge an Ameisensäure oder den entsprechenden oben genannten Derivaten wählt man im allgemeinen im Bereich von 2 bis 500, bevorzugt von 40 bis 60 l pro Mol Perylenhydrazid-imid I.

Die Reaktionstemperaturen wählt man üblicherweise im Bereich von 50 bis 200, vorzugsweise von 60 bis 90°C. Die Reaktionszeiten liegen in der Regel im Bereich von 3 bis 20 Stunden, vorzugsweise von 6 bis 18 Stunden.

Gewünschtenfalls kann man die Reaktion auch in einem Lösungsmittel wie eines stickstoffhaltigen Heterocyclus wie Pyridin, Picolin, Lutidin, Imidazol, vorzugsweise Imidazol, einer Carbonsäure wie Essigsäure oder eines Glykols wie Ethylenglykols durchführen, wobei man die Menge an Lösungsmittel üblicherweise im Bereich von 0,5 bis 20, vorzugsweise von 2 bis 10, insbesondere 5 kg pro Mol Perylenhydrazid-imid I wählt.

Das Reaktionsgemisch kann in der Regel durch Waschen des im allgemeinen ausgefallenen Niederschlages und anschließendes Trocknen aufarbeiten. Gewünschtenfalls kann man das gewünschte Produkt chromatographisch reinigen bzw. isolieren.

Die erfindungsgemässen Perylenderivate I, II und sowie deren mögliche Metallkomplexe eignen sich zur Verwendung als Farbmittel, insbesondere als Pigmente und Farbstoffe, nach in der Regel jeweils an sich bekannten Methoden, bevorzugt
(a) zur Masse-Färbung von Polymeren, wobei man als Polymere Polyvinylchlorid, Celluloseacetat, Polycarbonaten, Polyamiden, Polyurethanen, Polyimiden, Polybenzimidazolen, Melaminharzen, Silikonen, Polyestern, Polyethem, Polystyrol, Polymethylmethacrylat, Polyethylen, Polypropylen, Polyvinylacetat, Polyacrylnitril, Polybutadien, Polychlorbutadien oder Polyisopren bzw. die Copolymeren der genannten Monomeren einsetzen kann;
(b) als Küpenfarbstoffe oder Beizenfarbstoffe, z.B. zur Färbung von Naturstoffen sowie insbesondere von Papier, Holz, Stroh, Leder, Felle oder natürlichen Fasermaterialien wie Baumwolle, Wolle, Seide, Jute, Sisal, Hanf, Flachs oder Tierhaare (z.B. Roßhaar) und deren Umwandlungsprodukte wie die Viskosefaser, Nitratseide oder Kupferrayon (Reyon), wobei bevorzugte Salze zum Beizen Aluminium-, Chrom- und Eisensalze sind;
(c) bei der Herstellung von Farben, Lacken, insbesondere Automobillacken, Anstrichstoffen, Papierfarben, Druckfarben, Tinten, insbesondere zum Einsatz in Tintenstrahldruckern, bevorzugt in homogener Lösung als fluoreszierende Tinte, und für Mal- und Schreib-Zwecke, sowie in der Elektrophotographie z.B. für Trockenkopiersysteme (Xerox-Verfahren) und Laserdrucker;
(d) für Sicherheitsmarkierungs-Zwecke wie für Schecks, Scheckkarten, Geldscheine, Coupons, Dokumente, Ausweispapiere und dergleichen, bei denen ein besonderer, unverkennbarer Farbeindruck erzielt werden soll;
(e) als Zusatz zu Farbmitteln wie Pigmenten und Farbstoffen, bei denen eine bestimmte Farbnuance erzielt werden soll, bevorzugt sind besonders leuchtende Farbtöne;
(f) zum Markieren von Gegenständen zum maschinellen Erkennen dieser Gegenstände über die Fluoreszenz, bevorzugt ist die maschinelle Erkennung von Gegenständen zum Sortieren, z.B. auch für das Recycling von Kunststoffen, wobei alphanumerische Aufdrucke oder Barcodes vorzugsweise eingesetzt werden;
(g) zur Frequenzumsetzung von Licht, z.B. um aus kurzwelligem Licht längerwelliges, sichtbares Licht zu machen oder zur Frequenzverdopplung und Frequenzverdreifachung von Laserlicht in der nichtlinearen Optik;
(h) zur Herstellung von passiven Anzeigeelementen für vielerlei Anzeige-, Hinweis- und Markierungszwecke, z.B. passive Anzeigeelemente, Hinweis- und Verkehrszeichen, wie Ampeln;
(i) als Ausgangsmaterial für supraleitende organische Materialien (über π-π-Wechselwirkungen, nach Dotierung mit z.B. lod erhält man üblicherweise eine intermediäre Ladungsdelokalisierung);
(j) zur Feststoff-Fluoreszenz-Markierung;
(k) für dekorative und künstlerische Zwecke;
(l) zu Tracer-Zwecken, z.B. in der Biochemie, Medizin, Technik und Naturwissenschaft, wobei die erfindungsgemässen Farbmittel kovalent mit Substraten oder über Nebenvalenzen wie Wasserstoffbrückenbindungen oder hydrophobe Wechselwirkungen (Adsorption) verknüpft sein können;
(m) als Fluoreszenzfarbstoffe in hochempfindlichen Nachweisverfahren (siehe C. Aubert, J. Fünfschilling, 1. Zschokke-Gränacher und H. Langhals, Z. Analyt. Chem. 1985, 320, 361), insbesondere als Fluoreszenzfarbstoffe in Szintillatoren;
(n) als Farbstoffe oder Fluoreszenzfarbstoffe in optischen Lichtsammelsystemen, in Fluoreszenz-Solarkollektoren (siehe H. Langhals, Nachr. Chem. Tech. Lab. 1980, 28, 716), in Fluoreszenz-aktivierten Displays (siehe W. Greubel und G. Baur, Elektronik 1977, 26, 6), in Kaltlichtquellen zur lichtinduzierten Polymerisation zur Darstellung von Kunststoffen, zur Materialprüfung, z.B. bei der Herstellung von Halbleiterschaltungen, zur Untersuchung von Mikrostrukturen von integrierten Halbleiterbauteilen, in Photoleitern, in fotografischen Verfahren, in Anzeige-, Beleuchtungs- oder Bildwandlersystemen, bei denen die Anregung durch Elektronen, Ionen oder UV-Strahlung erfolgt, z.B. in Fluoreszenzanzeigen, Braunschen Röhren oder in Leuchtstoffröhren, als Teil einer integrierten Halbleiter-schaltung, die Farbstoffe als solche oder in Verbindung mit anderen Halbleitem z.B. in Form einer Epitaxie, enthalten, in Chemilumineszenzsystemen, z.B. in Chemilumineszenz-Leuchtstäben, in Lumineszenzimmunassays oder anderen Lumineszenznachweisverfahren, als Signalfarben, bevorzugt zum optischen Hervorheben von Schriftzügen und Zeichnungen oder anderen graphischen Produkten, zum Kennzeichnen von Schildern und anderen Gegenständen, bei denen ein besonderer optischer Farbeindruck erreicht werden soll, in Farbstoff-Lasern, bevorzugt als Fluoreszenzfarbstoffe zur Erzeugung von Laserstrahlen sowie als Q-Switch-Schalter;
(o) optische Speichermedien sowie (p) als Rheologieverbesserer.

Die erfindungsgemäßen Perylenderivate I sind leichtlösliche und gut zugängliche Aminoderivate, die sich hervorragend als Reagenzien zum qualitativen, halbquantitativen und quantitativen Nachweis von Carbonylverbindungen, Protonensäuren und Acylierungsmittel eignen.

Mit den erfindungsgemäßen Perylenhydrazonen II werden weitere, sehr stark fluoreszierende Perylenderivate zur Verfügung gestellt.

### Beispiele

### (A) Herstellung der Perylenhydrazid-imide I

### Beispiel 1: Allgemeine Vorschrift zur Synthese von N-(Alkyl)-perylen-3,4;9,10-tetracarbonsäure-3,4-hydrazid-9,10-imiden und N-(Aryl)-peryten-3,4;9,10-tetracarbonsäure-3,4-hydrazid-9,10-imiden

1 mmol N-(Alkyl)-perylen-3,4;9,10-tetracarbonsäure-3,4-anhydrid-9,10-imid wird in ca. 2 g Imidazol bei einer Ölbadtemperatur von 130 °C homogen in Lösung gebracht. Anschließend gibt man Hydrazinhydrat (100 proz.) im Überschuß (ca. 2 - 10 mmol, Verhältnis unkritisch) hinzu und läßt die Edukte 30 - 60 min reagieren. Den noch warmen Kolbeninhalt versetzt man vorsichtig mit Ethanol, überführt diesen unter mehrmaligem Nachspülen in 200 ml 2 N Salzsäure und läßt das Gemisch 1 - 2 h lang bei Raumtemperatur rühren. Das ausgefallene Rohprodukt wird über eine Fritte abgetrennt, mit Methanol/ Wasser gewaschen und ca. 12 h im Trockenschrank bei 100 °C getrocknet. Die Reinigung des Farbstoffes erfolgt chromatographisch über je eine Aluminiumoxid- und Kieselgelsäule, jeweils mit Chloroform/ Ethanol (20 + 1) als Laufmittel. Die Reinheit der Fraktionen wird mit Kieselgel/ Chloroform/ Ethanol (10 + 1) kontrolliert. Das Produkt kann dabei als dunkelrote, nicht fluoreszierende Bande abgetrennt werden. Das Produkt sollte bevorzugt nicht über Nacht auf einer Chromatographiesäule belassen werden, da in einem solchen Fall im allgemeinen Zersetzung eintreten kann. Bei Bedarf können die Farbstoffe durch extraktives Umkristallisieren (siehe H. Langhals, Chem. Ber. 118 (1985) 4641) aus Cyclohexan weiter gereinigt werden. Bei der mehrtägigen Prozedur kann unter Umständen in geringer Menge ein nicht identifiziertes, fluoreszierendes Zersetzungsprodukt entstehen, welches die Analyse üblicherweise jedoch nicht stört. Für die Synthese der Azomethine und den Nachweis von Carbonylverbindungen sollten jedoch vorzugsweise dünnschichtchromatograpisch einheitliche, nicht fluoreszierende N-(Alkyl)-perylen-3,4;9,10-tetracarbonsäure-3,4-hydrazid-9,10-imide eingesetzt werden. Diese Vorschrift eignet sich auch für die Darstellung von N-(Aryl)-perylen-3,4;9,10-tetracarbonsäure-3,4-anhydrid-9,10-imiden.

### Beispiel 2: N-(1-Butyl-pentyl)-perylen-3,4;9,10-tetracarbonsäure-3,4-hydrazid-9,10-imid (2a)

1.3 g (2.5 mmol) N-(1-Butyl-pentyl)-perylen-3,4;9,10-tetracarbonsäure-3,4-anhydrid-9,10-imid, 200 mg (4.0 mmol) Hydrazinhydrat und 4 g Imidazol werden entsprechend der allgemeinen Vorschrift aus Beispiel 1 umgesetzt. Reaktionszeit 1 h. Für die Elementaranalyse werden 100 mg des Farbstoffs aus Cyclohexan extraktiv (siehe H. Langhals, Chem. Ber. 118 (1985) 4641) umkristallisiert. Ausb. 820 mg (61 %), Schmp. > 350 °C. - *R*_{f} (Kieselgel/CHCl₃/ Ethanol/ (10 + 1)) = 0.70. - *R*_{f} (Kieselgel/ CHCl₃/ Ethanol/ (20 + 1)) = 0.59. - IR (KBr): ν = 3370 cm⁻¹ (w), 3330 (w), 3075 (w), 2957 (m), 2929 (m), 2868 (m), 1698 (s), 1656 (s), 1595 (s), 1577 (m), 1555 (w sh), 1506 (w), 1465 (w), 1456 (w), 1436 (w), 1404 (s), 1378 (m), 1348 (s), 1302 (m), 1255 (m), 1195 (w), 1173 (m), 1101 (m), 965 (m br.), 852 (m), 809 (s), 795 (w), 751 (w), 739 (m). - ¹H NMR (CDCl₃): δ = 0.82 (t, 6 H, 2 CH₃), 1.32 (m_{c}, 8 H, 4 CH₂), 1.89 (m_{c}, 2 H, 2 α-CH₂), 2.25 (m_{c}, 2 H, 2 α-CH₂), 5.16 (m_{c}, 1 H, NCH), 5.52 (s, 2 H, NH₂), 8.47 (d, ³*J* = 8.0 Hz, 2 H, Perylen), 8.52 (d, ³*J* = 8.1 Hz, 2 H , Perylen), 8.57 (d, ³*J* = 7.9 Hz, 2 H, Perylen), 8.63 (d br., ³*J* = 7.7 Hz, 2 H, Perylen). - ¹³C NMR (CDCl₃): δ = 14.04, 22.63, 29.16, 32.09, 54.83, 122.16, 122.90, 123.35, 126.01, 126.35, 127.90, 129.39, 131.53, 133.89, 135.05, 159.95. - UV (CHCl₃): λₘₐₓ (ε) = 528 nm (78700), 491 (48300), 460 (17800). - Fluoreszenz: λₘₐₓ = 535 nm, 574 (sehr schwache Fluoreszenz, die wahrscheinlich von einer Verunreinigung herrührt und nur in verdünnter Lösung beobachtet werden kann) - MS (70 eV); *m*/*z* (%): 532 (14), 531 (40) [M⁺], 514 (5) [M⁺ - OH], 418 (4), 407 (13), 406 (53), 405 (100) [M⁺ - C₉H₁₈], 390 (6), 388 (4), 377 (7), 376 (25), 84 (5), 82 (8), 55 (4). - C₃₃H₂₉N₃O₄ (531.6): Ber. C 74.56, H 5.50, N 7.90; Gef. C 73.93, H 5.50, N 7.87.

### Beispiel 3: N-(1-Hexyl-heptyl)-perylen-3,4;9,10-tetracarbonsäure-3,4-hydrazid-9,10-imid (2b)

2.0 g (3.5 mmol) N-(1-Hexyl-heptyl)-perylen-3,4;9,10-tetracarbonsäure-3,4-anhydrid-9,10-imid, 350 mg (6.9 mmol) Hydrazinhydrat und 7 g Imidazol werden entsprechend der allgemeinen Vorschrift umgesetzt (Reaktionszeit 1 h). Für die Elementaranalyse werden 150 mg des Farbstoffes aus Cyclohexan extraktiv umkristallisiert. Ausb. 830 mg (40%), Schmp. 332 - 334 °C. - *R*_{f} (Kieselgel/ CHCl₃/ Ethanol/ (10 + 1)) = 0.80. - *R*_{f} (Kieselgel/ CHCl₃/Ethanol/ (20 + 1)) = 0.61. - IR (KBr): ν = 2956 cm⁻¹ (m), 2927 (s), 2857 (m), 1699 (s), 1658 (s), 1595 (s), 1578 (m), 1556 (w), 1510 (w), 1458 (w), 1436 (w), 1404 (s), 1379 (w), 1350 s,1303 (w), 1255 (s), 1200 (w), 1174 (w), 1130 (w), 1110 (w), 980 (w), 852 (w), 805 (s), 800 (w), 739 (m). - ¹H NMR (COCl₃): δ = 0.81 (t, 6 H, 2 CH₃), 1.28 (m_{c}, 16 H, 8 CH₂), 1.88 (m_{c}, 2 H, 2 α-CH₂), 2.24 (m_{c}, 2 H, 2 α-CH₂), 5.16 (m_{c}, 1 H, NCH), 5.48 (s, 2 H, NH₂), 8.33 (d, ³*J* = 8.2 Hz, 2 H, Perylen), 8.41 (d, ³*J* = 8.2 Hz, 2 H , Perylen), 8.45 (d, ³*J* = 8.0 Hz, 2 H, Perylen), 8.57 (d br., ³*J* = 7.6 Hz, 2 H, Perylen). - ¹³C NMR (CDCl₃): δ = 14.03, 22.58, 26.97, 29.23, 31.76, 32.38, 54.91, 122.07, 122.80, 123.26, 125.90, 126.21, 127.78, 129.32, 131.40, 133.74, 134.91, 159.83. - UV (CHCl₃): λₘₐₓ (ε) = 527 nm (80000), 491 (48600), 460 (17800). - Fluoreszenz: λₘₐₓ = 535 nm, 575. Sehr schwache Fluoreszenz, die wahrscheinlich von einer Verunreinigung herrührt und nur in verdünnter Lösung beobachtet werden kann. - MS (70 eV); *m*/*z* (%): 588 (10), 587 (25) [M⁺], 570 (5) [M⁺ - OH], 418 (4), 407 (14), 406 (53), 405 (100) [M⁺ - C₁₃H₂₆], 390 (2), 388 (6), 377 (6), 376 (22), 360 (4). - C₃₇H₃₇N₃O₄ (587.7): Ber. C 75.61, H 6.35, N 7.15; Gef. C 75.32, H 6.24, N 7.01.

### Beispiel 4: N-(1-Heptyl-octyl)-perylen-3,4;9,10-tetracarbonsäure-3,4-hydrazid-9,10-imid (2c)

1.30 g (2.16 mmol) N-(1-Heptyl-octyl)-perylen-3,4;9,10-tetracarbonsäure-3,4-anhydrid-9,10-imid, 220 mg (4.40 mmol) Hydrazinhydrat in 5 g Imidazol werden entsprechend der allgemeinen Vorschrift umgesetzt. Reaktionszeit 1 h. Ausb. 720 mg (55%), Schmp. 307 - 308 °C. - *R*_{f} (Kieselgel/ CHCl₃/ Ethanol/ (10 + 1)) = 0.74. - *R*_{f} (Kieselgel/ CHCl₃/ Ethanol/ (20 + 1)) = 0.56. - IR (KBr): ν = 2955 cm⁻¹ (m), 2926 (s), 2855 (m), 1700 (s), 1658 (s), 1616 (w), 1595 (s), 1579 (m), 1508 (w), 1465 (w), 1457 (w), 1438 (w), 1404 (s), 1378 (w), 1349 (s br.), 1302 (w), 1255 (s), 1200 (w), 1173 (m), 1125 (w), 1115 (w), 970 (m br.), 855 (m), 809 (s), 800 (w), 795 (w), 739 (s). - ¹H NMR (CDCl₃): δ =0.81 (t, 6 H, 2 CH₃), 1.28 (m_{c}, 20 H, 10 CH₂), 1.89 (m_{c}, 2 H, 2 α-CH₂), 2.25 (m_{c}, 2 H, 2 α-CH₂), 5.16 (m_{c}, 1 H, NCH), 5.46 (s, 2 H, NH₂), 8.27 (d, ³*J* = 8.3 Hz, 2 H, Perylen), 8.35 (d, ³*J* = 8.1 Hz, 2 H , Perylen), 8.38 (d, ³*J* = 8.1 Hz, 2 H, Perylen), 8.55 (d br., ³*J* = 7.7 Hz, 2 H, Perylen). - ¹³C NMR (CDCl₃): δ = 14.05, 22.60, 27.03, 29.23, 29.53, 31.81, 32.36, 54.92, 121.93, 122.66, 123.14, 125. 70, 125.97, 127.57, 129.20, 131.19, 133.50, 134.66, 159.65. - UV (CHCl₃): λₘₐₓ (ε) = 528 nm (81500), 492 (49200), 460 (18100). - Fluoreszenz: λₘₐₓ = 536 nm, 575. Sehr schwache Fluoreszenz, die wahrscheinlich von einer Verunreinigung herrührt und nur in verdünnter Lösung beobachtet werden kann. - MS (70 eV); *m*/*z* (%): 616 (11), 615 (26) [M⁺], 598 (5) [M⁺ - OH], 430 (4), 418 (3), 407 (15), 406 (57), 405 (100) [M⁺ - C₁₅H₃₀], 391 (4), 390 (7), 377 (9), 376 (34), 360 (6), 331 (5), 275 (4), 249 (4), 124 (4), 123 (4), 69 (5), 55 (5). - C₃₉H₄₁N₃O₄ (615.8): Ber. C 76.07, H 6.71, N 6.82; Gef. C 76.48, H 6.74, N 6.89. (Als analysenreines Derivat konnte der dimere Farbstoff N²,N²-Bis-(1-heptyl-octyl)-N¹,N¹-bis(perylen-3,4;9,10-bis(dicarboximid)) synthetisiert werden.)

### Beispiel 5: N-(1-Octyl-nonyl)-perylen-3,4;9,10-tetracarbonsäure-3,4-hydrazid-9,10-imid (2d)

1.50 g (2.38 mmol) N-(1-Octyl-nonyl)-perylen-3,4;9,10-tetracarbonsäure-3,4-anhydrid-9,10-imid, 130 mg (2.60 mmol) Hydrazinhydrat in 6 g Imidazol werden entsprechend der allgemeinen Vorschrift umgesetzt (Reaktionszeit 1 h). Für die Elementaranalyse werden 100 mg des Farbstoffes aus Cyclohexan extraktiv umkristallisiert. Ausb. 700 mg (46%), Schmp. 286 - 287 °C. - *R*_{f} (Kieselgel/ CHCl₃/ Ethanol (10 + 1)) = 0.80. - *R*_{f} (Kieselgel/ CHCl₃/ Ethanol (20 + 1)) = 0.55. - IR (KBr): ν = 2955 cm⁻¹ (m), 2924 (s), 2854 (s), 1698 (s), 1658 (s), 1595 (s), 1578 (s), 1506 (w), 1485 (w), 1457 (m), 1436 (m), 1404 (s), 1378 (m), 1348 (s), 1302 (m), 1256 (s), 1200 (w), 1173 (m), 1128 (w), 1115 (w), 975 (m), 852 (w), 809 (s), 798 (w), 751 (w), 739 (s). - ¹H NMR (CDCl₃): δ = 0.81 (t, 6 H, 2 CH₃), 1.30 (m_{c}, 24 H, 12 CH₂), 1.89 (m_{c}, 2 H, 2 α-CH₂), 2.25 (m_{c}, 2 H, 2 α-CH₂), 5.16 (m_{c}, 1 H, NCH), 5.49 (s, 2 H, NH₂), 8.35 (d, ³*J* = 8.1 Hz, 2 H, Perylen), 8.42 (d, ³*J* = 8.3 Hz, 2 H, Perylen), 8.46 (d, ³*J* = 7.9 Hz, 2 H, Perylen), 8.57 (d br., 2 H, Perylen). - ¹³C NMR (CDCl₃): δ = 14.06, 22.62, 27.02, 29.25, 29.51, 29.57, 31.83, 32.37, 54.92, 122.01, 122.74, 123.20, 125.81, 126.10, 127.69, 129.27, 131.30, 133.62, 134.80, 159.75. - UV (CHCl₃): λₘₐₓ (ε) = 528 nm (80600), 492 (48600), 460 (17400). - Fluoreszenz (CHCl₃): λₘₐₓ = 539 nm, 570. Sehr schwache Fluoreszenz, die wahrscheinlich von einer Verunreinigung herrührt und nur in verdünnter Lösung beobachtet werden kann. - MS (70 eV); *m*/*z* (%): 644 (13), 643 (27) [M⁺], 626 (5) [M⁺ - OH], 430 (4), 418 (3), 407 (16), 406 (58), 405 (100) [M⁺ - C₁₇H₃₄], 391 (5), 390 (7), 388 (6), 377 (6), 376 (23), 360 (4), 331 (3). - C₄₁H₄₅N₃O₄ (643.8): Ber. C 76.49, H 7.05, N 6.53; Gef. C 76.51, H 7.08, N 6.60.

### Beispiel 6: N-(1-Nonyl-decyl)-perylen-3,4;9,10-tetracarbonsäure-3,4-hydrazid-9,10-imid (2e)

1.33 g (2.02 mmol N-(1-Nonyl-decyl)-perylen-3,4;9,10-tetracarbonsäure-3,4-anhydrid-9,10-imid und 320 mg (6.40 mmol) Hydrazinhydrat in 5 g Imidazol werden entsprechend der allgemeinen Vorschrift umgesetzt (Reaktionszeit 2 h). Ausb. 800 mg (60%), Schmp. 268 - 271 °C. - *R*_{f} (Kieselgel/ CHCl₃/ Ethanol (10 + 1)) = 0.76. - R_{f} (Kieselgel/ CHCl₃/ Ethanol (20 + 1)) = 0.51. - *R*_{f} (Kieselgel/ CHCl₃/ 1-Butanol (40 + 1)) = 0.28. - IR (KBr): v = 2955 cm⁻¹ (m), 2925 (s), 2854 (m), 1698 (s), 1658 (s), 1617 (w), 1595 (s), 1577 (m), 1507 (w), 1468 (w), 1457 (w), 1437 (w), 1404 (m), 1378 (w), 1349 (s), 1302 (w), 1256 (m), 1202 (w), 1173 (m), 1055 (w), 1040 (w), 975 (w br.), 855 (w), 809 (s), 800 (w), 739 (m). - ¹H NMR (CDCl₃): δ = 0.80 (t, 6 H, 2 CH₃), 1.28 (m_{C}, 28 H, 14 CH₂), 1.89 (m_{C}, 2 H, 2 α-CH₂), 2.23 (m_{C}, 2 H, 2 α-CH₂), 5.16 (m_{c}, 1 H, NCH), 5.49 (s, 2 H, NH₂), 8.33 (d, ³*J* = 8.1 Hz, 2 H, Perylen), 8.41 (d, ³*J* = 8.1 Hz, 2 H, Peryfen), 8.45 (d, ³*J* = 7.7 Hz, 2 H, Perylen), 8.58 (s, br., 2 H, Perylen). - ¹³C NMR (CDCl₃): δ = 14.49, 23.05, 27.44, 29.68, 29.98, 32.27, 32.78, 55.34, 122.43, 123.15, 123.62, 126.21, 126.51, 128.10, 129.68, 131.72, 134.03, 135.20, 160.17. - UV (CHCl₃): λₘₐₓ (ε) = 528 nm (81000), 492 (49500), 460 (18500). - Fluoreszenz: λₘₐₓ = 536 nm, 574. Sehr schwache Fluoreszenz, die wahrscheinlich von einer Verunreinigung herrührt und nur in verdünnter Lösung beobachtet werden kann. - MS (70 eV); *m*/*z* (%): 673 (3), 672 (13), 671 (29) [M⁺], 654 (5), [M⁺ -OH], 418 (3), 408 (4), 407 (17), 406 (62), 405 (100) [M⁺ - C₁₉H₃₈], 391 (4), 390 (8), 389 (3), 388 (9), 377 (10), 376 (33), 360 (6), 331 (4), 124 (5), 82 (5), 55 (5). - C₄₃H₄₉N₃O₄: Ber. 671.3723; Gef. 671.3717 (MS). - C₄₃H₄₉N₃O₄ (671.9): Ber. C 76.87, H 7.35, N 6.25; Gef. C 76.80, H 7.25, N 6.32.

### Beispiel 7: N-(2,5-Di-tert-butyl-phenyl)-perylen-3,4;9,10-tetracarbonsäure-3,4-hydrazid-9,10-imid (2f)

150 mg (0.26 mmol) N-(2,5-Di-*tert*-butyl-phenyl)-perylen-3,4;9,10-tetracarbonsäure-3,4-anhydrid-9,10-imid, 50 mg (1.00 mmol) Hydrazinhydrat in 2 g Imidazol werden entsprechend der allgemeinen Vorschrift umgesetzt (Reaktionsdauer 30 min). Ausb. 40 mg (26%), Schmp. > 350 °C. - *R*_{f} (Kieselgel/ CHCl₃/ Ethanol/ (20 + 1)) = 0.57. - *R*_{f} (Aluminiumoxid/ CHCl₃/Ethanol/ (20 + 1)) = 0.35. - IR (KBr): ν = 2964 cm⁻¹ (m), 2875 (w), 1701 (s br.), 1685 (w), 1666 (s br.), 1616 (w), 1594 (s), 1579 (m), 1506 (w), 1434 (w), 1402 (m), 1359 (s), 1255 (m), 1174 (w), 1150 (w), 970 (w br.), 855 (w), 828 (w), 809 (m), 804 (w), 741 (m), 735 (w), 651 (w). - ¹H NMR (CDCl₃): δ = 1.27 (s, 9 H, C(CH₃)₃), 1.34 (s, 9 H, C(CH₃)₃), 5.55 (s, 2 H, NH₂), 7.14 (d, ⁴*J* = 2.2 Hz, 1 H, Aromat), 7.46 (dd, ³*J* = 8.6 Hz, ⁴*J* = 2.2 Hz, 1 H, Aromat), 7.59 (d, ³*J* = 8.6 Hz, 1 H, Aromat), 8.58 (d, ³*J* = 8.1 Hz, 2 H, Perylen), 8.61 (d, ³*J* = 8.2 Hz, 2 H , Perylen), 8.66 (d, ³*J* = 8.0 Hz, 2 H, Perylen), 8.72 (d, ³*J* = 7.9 Hz, 2 H, Perylen). - ¹³C NMR (CDCl₃): δ = 31.22, 31.71, 122.41, 123.16, 123.41, 123.92, 126.36, 127.79, 127.96, 128.75, 129.72, 130.83, 131.60, 131.74, 132.51, 134.52, 135.05. 143.71, 150.22, 160.04, 164.30. - UV (CHCl₃): λₘₐₓ (ε) = 528 nm (84650), 491 (50700), 460 (18850). - Fluoreszenz (CHCl₃): λₘₐₓ = 539 nm, 576 (sehr schwache Fluoreszenz, die wahrscheinlich von einer Verunreinigung herrührt und nur in verdünnter Lösung beobachtet werden kann.) - MS (70 eV); *m*/*z* (%): 593 (3) [M⁺], 578 (4) [M⁺ - CH₃], 576 (3) [M⁺ - OH], 538 (8), 537 (39), 536 (100) [M⁺ - C₄H₉], 522 (6), 521 (10), 520 (9) [576 - C₄H₈], 506 (2), 390 (1), 57 (3). - C₃₇H₂₈N₃O₄: [M⁺ - CH₃] Ber. 578.2080; Gef. 578.2080 (MS). - C₃₈H₃₁N₃O₄ (593.7): Ber. C 76.88, H 5.26, N 7.08; Gef. C 75.93, H 5.39, N 6.83.

### (B) Darstellung der Perylenhydrazone II

### Beispiel 8: N-(1-Octyl-nonyl)-perylen-3,4;9,10-tetracarbonsäure-3,4-(benzylimin)-imid-9,10-imid (3)

100 mg (0.16 mmol) N-(1-Octyl-nonylrperylen-3,4;9,10-tetracarbonsäure-3,4-hydrazid-9,10-imid werden mit 4 ml (40 mmol) frisch dest. Benzaldehyd 4 h bei 60 °C gerührt. Die Reaktion bricht man durch Zutropfen von ca. 50 ml Methanol ab. Der ausgefallene Farbstoff wird über eine D4-Fritte abgetrennt und intensiv mit Methanol und Diethylether gewaschen. Den getrockneten Niederschlag nimmt man in wenig Chloroform auf und filtriert die Lösung anschließend durch eine säurespurenfreie D4-Fritte. Die Lösung wird mit Methanol versetzt und das Lösungsmittelgemisch am Rotationsverdampfer abdestilliert. Das reine Produkt trocknet man anschließend 24 h bei 40 °C im Ölpumpenvakuum. Ausb. 110 mg (96%), Schmp. 329 - 332°C. - *R*_{f} (Kieselgel/ CHCl₃/ Ethanol (10 + 1)) =0.95. - *R*_{f} (Kieselgel/ CHCl₃/Ethanol (20 + 1)) =0.88. - IR (KBr): ν = 2954 cm⁻¹ (m), 2926 (s), 2854 (m), 1697 (s), 1660 (s), 1616 (w), 1594 (s), 1579 (m), 1506 (w), 1457 (w), 1449 (w), 1435 (w), 1405 (m), 1354 (m), 1338 (s), 1254 (m), 1176 (m), 1000 (w), 965 (w), 851 (m), 809 (s), 800 (m), 755 (m), 739 (m), 690 (m). - ¹H NMR (CDCl₃): δ= 0.81 (t, 6 H, 2 CH₃), 1.25 (m_{c}, 24 H, 12 CH₂), 1.89 (m_{c}, 2 H, 2 α-CH₂), 2.22 (m_{c}, 2 H, 2 α-CH₂), 5.15 (m_{c}, 1 H, NCH), 7.52 (m_{c}, 3 H, Aromat), 7.99 (d, ³*J* = 7.1 Hz, 2 H, Aromat), 8.29 (d, ³*J* = 8.1 Hz, 2 H, Perylen), 8.37 (d, ³*J* = 8.1 Hz, 2 H, Perylen), 8.44 (d, ³*J* = 7.9 Hz, 2 H, Perylen), 8.56 (s, br., 2 H, Perylen), 8.62 (s, 1 H, N=CH). - ¹³C NMR (CDCl₃): δ = 14.05, 22.61, 27.04, 29.24, 29.50, 29.56, 31.82, 32.39, 54.93, 122.83, 122.87, 123.02, 125.88, 126.07, 128.42, 128.80, 129.29, 129.36, 130.87, 131.48, 132.49, 132.56, 133.72, 134.57, 159.93, 163.50 br., 164.20 br., 171.27. - UV (CHCl₃): λₘₐₓ (ε) = 528 nm (87400), 491 (52500), 460 (18900). - Fluoreszenz (CHCl₃): λₘₐₓ = 535 nm, 575. - MS (70 eV); *m*/*z* (%): 732 (3), 731 (6) [M⁺], 714 (2), 629 (8), 628 (16) [M⁺- C₇H₅N], 611 (3), 495 (4), 494 (9), 403 (2), 393 (2), 392 (12), 391 (44), 390 (100) [628 - C₁₇H₃₄], 374 (2), 373 (4), 346 (3), 345 (3), 104 (6), 103 (58) [C₇H₅N⁺], 76 (16), 75 (4), 51 (3), 50 (6). - C₄₈H₄₉N₃O₄ (731.9): Ber. C 78.77, H 6.75, N 5.74; Gef. C 78.82, H 6.99, N 5.77.

### Beispiel 9: N-(1-Hexyl-heptyl)-perylen-3,4;9,10-tetracarbonsäure-3,4-(benzylimin)-imid-9,10-imid

100 mg (0.17 mmol) N-(1-Hexyl-heptyl)-perylen-3,4;9,10-tetracarbonsäure-3,4-hydrazid-9,10-imid werden mit 3 ml (30 mmol) Benzaldehyd versetzt und unter starkem Rühren 3 h auf 60 °C erwärmt. Die noch warme Reaktionsmischung verdünnt man mit 50 ml Methanol und saugt den ausgefallenen Niederschlag,nach ca. 30 min ab. Anschließend wird der Farbstoff intensiv mit Methanol und Diethylether gewaschen und bei 100 °C getrocknet. Der rote Festkörper wird in wenig Chloroform aufgenommen und zur Beseitigung fester Inhaltsstoffe durch eine D5-Fritte (vor Benutzung mit Chloroform/ Triethylamin (10 + 1) gespült) filtriert. *R*_{f} (Kieselgel/ CHCl₃/ Ethanol/ (10 + 1)) = 0.87. - *R*_{f} (Kieselgel/ CHCl₃/ Ethanol/ (20 + 1)) = 0.78. - IR (KBr): ν = 2954 cm⁻¹ (m), 2928 (m), 2857 (m), 1697 (s), 1680 (s), 1616 (w), 1594 (s), 1579 (m), 1449 (m), 1432 (m), 1405 (m), 1355 (m), 1336 (s), 1253 (s), 1176 (m), 852 (w), 809 (s), 755 (m), 739 (w), 683 (w). - UV (CHCl₃): λₘₐₓ = 528 nm, 491, 460. - Fluoreszenz (CHCl₃): λₘₐₓ = 535 nm, 575. - MS (70 eV); *m*/*z* (%): 675 (8) [M⁺], 658 (2), 573 (9), 572 (20) [M⁺ - C₇H₅N], 555 (4), 494 (8), 406 (5), 405 (9), 392 (11), 391 (41), 390 (100) [572 - C₁₃H₂₆], 346 (6), 345 (4), 105 (10), 104 (14), 103 (17) [C₇H₅N⁺].

### Beispiel 10: N-(1-Hexyl-heptyl)-perylen-3,4;9,10-tetracarbonsäure-3,4-(4-methoxy-benzylimin)-imid-9,10-imid

100 mg (0,17 mmol) N-(1-Hexyl-heptyl)-perylen-3,4;9,10-tetracarbonsäure-3,4-hydrazid-9,10-imid und 3 ml (25 mmol) 4-Methoxybenzaldehyd (Anisaldehyd) werden 1 h bei 40 °C (wenig Umsatz) und dann 1 h bei 60 °C zur Reaktion gebracht. Ausb. 90 mg (80%), Schmp. 348 - 350 °C. - *R*_{f} (Kieselgel/ CHCl₃/ Ethanol (10 + 1)) =0.92. - *R*_{f} (Kieselgel/ CHCl₃/Ethanol (20 + 1)) =0.85. - R_{f} (Kieselgel/ CHCl₃/ 1-Butanol (40 + 1)) = 0.44. - IR (KBr): v = 3065 cm⁻¹ (w), 2956 (m), 2928 (s), 2857 (m), 1696 (s), 1658 (s), 1594 (s), 1579 (s), 1515 (m), 1457 (m), 1431 (m), 1423 (m), 1405 (s), 1355 (m), 1336 (s br.), 1254 (s br.), 1205 (w), 1172 (s), 1126 (w), 1110 (w), 1055 (w), 991 (w), 962 (w), 851 (m), 833 (m), 809 (s), 799 (m), 754 (w), 739 (s). - ¹H NMR (CDCl₃): δ = 0.83 (t, 6 H, 2 CH₃), 1.28 (m_{C}, 16 H, 8 CH₂), 1.90 (m_{C}, 2 H, 2 α-CH₂), 2.24 (m_{C} 2 H, 2 α-CH₂), 3.91 (s, 3 H, OCH₃), 5.18 (m_{C}, 1 H, NCH), 7.02 (d, ³*J* = 8.8 Hz, 2 H, Aromat), 7.95 (d, ³*J* = 8.9 Hz, 2 H, Aromat), 8.52 (d, ³*J* = 8.2 Hz, 2 H, Perylen), 8.54 (d, ³*J* = 9.1 Hz, 3 H, 2 H Perylen, 1 H N=CH), 8.63 (d, ³*J* = 8.1 Hz, 4 H, Perylen). - ¹³C NMR (CDCl₃): δ = 14.02, 22.57, 26.95, 29.21, 31.74, 32.38, 54.86, 114.28, 122.99, 123.16. 125.17, 126.16, 126.40, 128.67, 129.43, 131.23, 131.71, 134.08, 134.83, 160.31, 163.26, 170.63. - UV (CHCl₃): λₘₐₓ (ε) = 528 nm (92800), 491 (55900), 460 (20300). - Fluoreszenz (CHCl₃): λₘₐₓ = 543 nm, 575 (Schwache Fluoreszenz). - MS (70 eV); *m*/*z* (%): 706 (1), 705 (1) [M⁺], 574 (2), 573 (9), 572 (23) [M⁺ - C₈H₇NO], 555 (5), 524 (4), 403 (2), 392 (13), 391 (45), 390 (100) [M⁺ - C₈H₇NO - C₁₃H₂₆], 374 (2), 373 (7), 346 (5), 345 (5), 133 (13) [C₈H₇NO⁺], 103 (5), 90 (4), 55 (2). - C₄₅H₄₃N₃O₅: Ber. 705.3203; Gef. 705.3202 (MS). - C₄₅H₄₃N₃O₅ (705.9): Ber. C 76.57, H 6.14, N 5.95; Gef. C 76.40, H 6.09, N 5.91.

### Beispiel 11: N-(1-Hexyl-heptyl)-perylen-3,4;9,10-tetracarbonsäure-3,4-(2-furfuryl-imin)-imid-9,10-imid

100 mg (0.17 mmol) N-(1-Hexyl-heptyl)-perylen-3,4;9,10-tetracarbonsäure-3,4-hydrazid-9,10-imid und 3 ml (36 mmol) Furfural werden 2 h bei 50 °C, anschließend 2 Tage bei 80 °C zur Reaktion gebracht. Ausb. 100 mg (91%), Schmp. 334 - 337 °C. - *R*_{f} (Kieselgel/ CHCl₃/Ethanol (10 + 1)) = 0.86. - *R*_{f} (Kieselgel/ CHCl₃/ Ethanol (20 + 1)) =0.79. - *R*_{f} (Kieselgel/CHCl₃/ 1-Butanol (40 + 1)) = 0.32. - IR (KBr): ν = 2956 cm⁻¹ (m), 2928 (m), 2856 (m), 1696 (s), 1660 (s br.), 1636 (w), 1623 (w), 1618 (w), 1594 (s), 1578 (m), 1506 (w), 1476 (w), 1457 (w), 1430 (w), 1405 (m), 1331 (s br.), 1253 (m), 1176 (m), 1018 (w), 809 (s), 739 (m). - ¹H NMR (CDCl₃): δ = 0.81 (t, 6 H, 2 CH₃), 1.22 (m_{c}, 16 H, 8 CH₂), 1.87 (m_{c}, 2 H, 2 α-CH₂), 2.22 (m_{c}, 2 H, 2 α-CH₂), 5.16 (m_{c}, 1 H, NCH), 6.62 (dd, *J* = 1.8 Hz, *J* = 1.8 Hz, 1 H, Aromat), 7.15 (d, *J* = 3.5 Hz, 1 H, Aromat), 7.70 (d, *J* = 1.7 Hz, 1 H, Aromat), 8.52 (d, ³*J* = 8.1 Hz, 2 H, Perylen), 8.52 (s, 1 H, N=CH), 8.55 (d, ³*J* = 8.2 Hz, 2 H, Perylen), 8.64 (d, ³*J* = 7.9 Hz, 4 H, Perylen). - ¹³C NMR (CDCl₃): δ = 14.01, 22.56, 26.94, 29.20, 31.74, 32.37, 54.86, 112.48, 118.67, 122.99, 123.00, 123.26, 123.42 br., 124.16 br., 126.19, 126.45, 128.72, 129.44, 131.03 br., 131.89, 134.07, 135.01, 146.87, 148.03, 158.38, 160.20, 163.43 br., 164.45 br.. - UV (CHCl₃): λₘₐₓ (ε) = 528 nm (89100), 491 (53400), 460 (19000). - Fluoreszenz (CHCl₃): λₘₐₓ = 538 nm, 575 (sehr schwache Fluoreszenz). - MS (70 eV); *m*/*z* (%): 666 (2), 665 (4) [M⁺], 573 (6) [M⁺ - C₅H₂NO], 572 (14) [M⁺ - C₅H₃NO], 555 (3), 485 (3), 484 (6), 405 (3), 392 (10), 391 (43), 390 (100) [572 - C₁₃H₂₆], 373 (6), 345 (5). - C₄₂H₃₉N₃O₅ (665.8): Ber. C 75.77, H 5.90, N 6.31; Gef. C 75.66, H 5.69, N 6.40.

### Beispiel 12: N-(1-Hexyl-heptyl)-perylen-3,4;9,10-tetracarbonsäure-3,4-(cyclohexyl-imin)-imid-9,10-imid

100 mg (0.17 mmol) N-(1-Hexyl-heptyl)-perylen-3,4;9,10-tetracarbonsäure-3,4-hydrazid-9,10-imid werden mit 10 ml (96 mmol) Cyclohexanon versetzt und unter Rühren 10 min auf 70 °C erwärmt. Den Ansatz läßt man danach noch weitere 12 h bei Raumtemperatur rühren. Die Reaktion wird dünnschichtchromatographisch verfolgt und erst abgebrochen, wenn kein Edukt mehr nachweisbar ist. Man entfernt das überschüssige Cyclohexanon im Feinvakuum. Der Farbstoff wird mit mit Methanol gewaschen und anschließend getrocknet. Man nimmt das Produkt in wenig Chloroform auf und filtriert die Lösung durch eine D4-Fritte. Das Filtrat wird mit Methanol versetzt und das Lösungsmittelgemisch am Rotationsverdampfer abgezogen. Man trocknet den reinen Farbstoff danach 24 h im Ölpumpenvakuum bei 40 °C. - *R*_{f} (Kieselgel/ CHCl₃/ Aceton (10 + 1) = 0.68. - *R*_{f} (Kieselgell CHCl₃/ Ethanol/ (10 + 1)) = 0.86. - *R*_{f} (Kieselgel/ CHCl₃/ Ethanol/ (20 + 1)) = 0.68. - IR (KBr): ν = 2955 cm⁻¹ (m), 2928 (m), 2857 (m), 1698 (s), 1660 (s), 1594 (s), 1579 (m), 1506 (w), 1457 (w), 1431 (w), 1405 (m), 1355 (m sh), 1341 (s sh), 1336 (s), 1255 (m), 1208 (w), 1177 (w), 1127 (w), 1110 (w), 980 (w), 965 (w), 852 (w), 809 (m), 741 (w). - ¹H NMR (CDCl₃): δ =0.80 (t, 6 H, 2 CH₃), 1.28 (m_{c}, 16 H, 8 CH₂), 1.70 (s, 4 H, Cyclohexylrest), 1.86 (m_{c}, 2 H, 2 α-CH₂), 1.96 (s, 2 H, Cyclohexylrest), 2.21 (m_{c}, 4 H, 2 α-CH₂/ 2 Cyclohexylrest), 2.75 (t, 2 H, Cyctohexylrest), 5.16 (m_{c}, 1 H, NCH), 8.57 (d, ³*J* = 8.1 Hz, 2 H, Perylen), 8.59 (d, ³*J* = 8.1 Hz, 2 H, Perylen), 8.65 (d, ³*J* = 8.1 Hz, 4 H, Perylen). - ¹³C NMR (CDCl₃): δ = 14.44, 22.98, 25.98, 26.73, 27.34, 27.81, 29.62, 30.84, 32.16, 32.78, 36.22, 54.93, 123.41, 123.65, 126.70, 126.99, 129.93, 131.53, 134.69, 135.33, 160.12, 185.81. - UV (CHCl₃): λₘₐₓ (ε) = 527 nm (85800), 491 (51400), 459 (18600). - Fluoreszenz (CHCl₃): λₘₐₓ = 539 nm, 575. - MS (70 eV); *m*/*z* (%): 668 (36), 667 (84) [M⁺], 651 (6), 650 (12), 626 (7), 624 (55), 585 (11), 557 (6), 556 (10), 487 (17), 486 (56), 485 (62) [M⁺ - C₁₃H₂₆], 444 (7), 443 (40), 442 (100) [485 - C₃H₇], 429 (6), 404 (9), 403 (19), 392 (16), 391 (60), 390 (65), 389 (6), 376 (10), 375 (34), 373 (28), 363 (5), 362 (15), 361 (21), 347 (10), 346 (31), 345 (22), 333 (9), 305 (10), 302 (7), 275 (6), 274 (7), 69 (12), 65 (7), 55 (20). - C₄₃H₄₅N₃O₄ (667.8): Ber. C 77.33, H 6.79, N 6.29; Gef. C 76.76, H 6.79, N 6.15.

### Beispiel 13: N-(1-Hexyl-heptyl)-perylen-3,4;9,10-tetracarbonsäure-3,4-((1-butyl)-imin)-imid-9,10-imid

100 mg (0.17 mmol) N-(1-Hexyl-heptyl)-perylen-3,4;9,10-tetracarbonsäure-3,4-hydrazid-9,10-imid werden mit 5 ml (47 mmol) Pentanal (Valeraldehyd) versetzt und 24 h bei Raumtemperatur gerührt. Man entfernt den überschüssigen Aldehyd im Feinvakuum. Der Rückstand wird mit wenig kaltem Methanol gewaschen und anschließend über CaCl₂ gut getrocknet. Man nimmt das Produkt in wenig Chloroform auf und filtriert die Lösung durch eine D4-Fritte. Das Filtrat wird mit Methanol versetzt und das Lösungsmittelgemisch am Rotationsverdampfer abgezogen. Man trocknet den reinen Farbstoff danach 24 h im Ölpumpenvakuum bei 40 °C. Bei dem Versuch den Farbstoff chromatographisch (Kieselgel/ Chloroform/ Ethanol (20 + 1)) zu reinigen, hat sich das Produkt zersetzt. Ausb. 90 mg (90%). - *R*_{f} (Kieselgel/ CHCl₃/ Ethanol/ (20 + 1)) = 0.88. - IR (KBr): ν = 2957 cm⁻¹ (m), 2928 (m), 2857 (w), 1698 (s), 1660 (s), 1616 (w), 1594 (s), 1579 (m), 1510 (w), 1457 (w), 1432 (w), 1405 (m), 1354 (m), 1336 (s), 1254 (m), 1207 (w), 1177 (m), 851 (w), 809 (m), 800 (w), 739 (m). - ¹H NMR (CDCl₃): δ = 0.81 (t, 6 H, 2 CH₃), 1.03 (t, 3 H, CH₃), 1.26 (m_{c}, 16 H, 8 CH₂), 1.60 (m_{c}, 2 H, CH₂), 1.76 (m_{c}, 2 H, CH₂), 1.88 (m_{c}, 2 H, 2 α-CH₂), 2.22 (m_{c} 2 H, 2 α-CH₂), 2.70 (q, 2 H, CH₂), 5.16 (m_{c}, 1 H, NCH), 8.02 (t, 1 H, N=CH), 8.50 (m_{c}, 8 H, Perylen) (Im ^{*1*}H-NMR-Spektrum sind bereits bei 5.48 ppm die NH₂-Protonen des Eduktes erkennbar). - ¹³C NMR (CDCl₃): δ = 13.86, 14.03, 22.30, 22.58, 26.97, 27.88, 29.22, 31.76, 32.37, 33.28, 54.86, 122.89, 123.00, 123.13, 126.06, 131.56, 133.96, 134.78, 160.04, 177.76. - UV (CHCl₃): λₘₐₓ = 528 nm, 491, 460. - Fluoreszenz (CHCl₃): λₘₐₓ = 535 nm, 575. - MS (70 eV); *m*/*z* (%): 655 (4) [M⁺], 614 (4), 613 (9), 599 (4), 598 (9), 587 (9), 586 (20), 573 (6), 572 (13) [M⁺ - C₅H₉N], 557 (4), 556 (4), 474 (8), 431 (8), 416 (9), 406 (5), 405 (13), 404 (17), 403 (5), 392 (13), 391 (53), 390 (100) [572 - C₁₃H₂₆], 376 (5), 375 (7), 374 (7), 373 (9), 346 (9), 345 (8). - C₄₂H₄₅N₃O₄: Ber. 655.3410;. Gef. 655.3405 (MS).

### Beispiel 14: Derivatisierung von Pentanal mit N-(1-Hexyl-heptyl)-perylen-3,4;9,10-tetracarbonsäure-3,4-hydrazid-9,10-imid unter Verwendung von Al₂O₃ als Trocknungsmittel

100 mg (0.17 mmol) N-(1-Hexyl-heptyl)-perylen-3,4;9,10-tetracarbonsäure-3,4-hydrazid-9,10-imid, 1 ml (18 mmol) Pentanal und 1.3 g Aluminiumoxid (neutral) werden in 10 ml Chloroform zum Rückfluß erhitzt. Nach 30 min läßt sich mit Hilfe eines Dünnschicht-chromatogramms (Kieselgel/ Chloroform/ Ethanol (10 + 1) oder Aluminiumoxid/ Chloro-form) zeigen, daß sich das nicht fluoreszierende Edukt N-(1-Hexyl-heptyl)-perylen-3,4;9,10-tetracarbonsäure-3,4-hydrazid-9,10-imid weitgehend zum stark fluoreszierenden Produkt umgesetzt hat. Neben Spuren des Eduktes kann man noch zwei geringe Verunreinigungen (*R*_{f} Kieselgel/Chloroform/ Ethanol/ (10 + 1) = 0.75 und 0.69) identifizieren. Auch nach erneuter Zugabe von weiterem Aldehyd und Al₂O₃ ändert sich im Zeitraum von 3 h nichts. Das Trockenmittel wird abfiltriert und das Produkt mit Methanol ausgefällt. Die beiden Lösungsmittel werden anschließend abdestilliert, weil der Farbstoff noch merklich gelöst ist. Erst nach der Aufarbeitung mit Methanol kann man auf dem Dünnschichtchromatogramm ein intensiv gefärbtes Zersetzungsprodukt ausmachen. - *R*_{f} (Kieselgel/ CHCl₃/ Ethanol/ (10 + 1)) = 0.85. Hauptprodukt. - *R*_{f} (Aluminiumoxid/ CHCl₃) = 0.60. Hauptprodukt 78. - *R*_{f} (Kieselgel/ CHCl₃/ Ethanol/ (10 + 1)) = 0.90. Zersetzungsprodukt. - *R*_{f} (Aluminiumoxid/ CHCl₃) = 0.81. Zersetzungsprodukt.

### Beispiel 15: N-(1-Hexyl-heptyl)-perylen-3,4;9,10-tetracarbonsäure-3,4-((1-hexylimin)-imid-9,10-imid

160 mg (0.28 mmol) N-(1-Hexyl-heptyl)-peryten-3,4;9,10-tetracarbonsäure-3,4-hydrazid-9,10-imid werden in 2 ml (14.3 mmol) Heptanal (Önanthaldehyd) 4 h bei 50 °C gerührt. Den überschüssigen Aldehyd entfernt man nach beendeter Reaktion im Vakuum. Der Rückstand wird mehrmals mit wenig kalten Methanol gewaschen und anschließend getrocknet (der charakteristische Geruch des Önanthaldehyds ist auch nach dem Trocknen deutlich wahrnehmbar). Die Reinigung des Farbstoffes erfolgt durch Säulenchromatographie über Kieselgel mit Essigsäureethylester als Laufmittel. Nach einem kurzem Vorlauf kann das intensiv fluoreszierende Produkt vom nicht fluoreszierenden Edukt gut abgetrennt werden. Die Chromatographie wird zügig und ohne größere Unterbrechungen durchgeführt, da sich die Hydrazone schnell auf dem Säulenmaterial zersetzen. Die einheitliche Farbstofffraktion wird im Vakuum unter milden Erwärmen vom Lösungsmittel befreit und im Ölpumpenvakuum getrocknet. Ausb. 90 mg (48%). - *R*_{f} (Kieselgel/ CHCl₃/ Ethanol (10 + 1)) = 0.88. - *R*_{f} (Kieselgel/ Essigsäureethylester) = 0.81. - IR (KBr): ν = 2955 cm⁻¹ (m), 2928 (m), 2857 (m), 1700 (s), 1660 (s), 1595 (s), 1579 (m), 1506 (w), 1465 (w), 1457 (w), 1430 (w), 1405 (m), 1352 (m sh), 1337 (s), 1254 (m), 1177 (m), 850 (w), 809 (m), 798 (w), 739 (m). - ¹H NMR (CDCl₃): δ = 0.81 (t, 6 H, 2 CH₃), 0.91 (t; 3 H, CH₃), 1.28 (m_{c}, 20 H, 8 CH₂ + 2 CH₂), 1.56 (m_{c}, 2 H, CH₂), 1.85 (m_{c}, 2 H, 2 α-CH₂), 2.24 (m_{c} 2 H, 2 α-CH₂), 2.40 (t, ³*J* = 8.3 Hz, 2 H, CH₂), 2.70 (dd, ³*J* = 7.5 Hz, ⁴*J* = 1.3 Hz, 2 H, CH₂), 5.18 (m_{c}, 1 H, NCH), 8.02 (t, ³*J* = 6.5 Hz, 1 H, N=CH), 8.45 (d, ³*J* = 8.1 Hz, 2 H, Aromat), 8.48 (d, ³*J* = 8.1 Hz, 2 H, Perylen), 8.57 (d, ³*J* = 8.0 Hz, 2 H Perylen), 8.63 (s br., 2 H, Perylen). - ¹³C NMR (CDCl₃): δ = 14.02, 22.04, 22.57, 25.77, 26.96, 28.81, 29.21, 31.54, 31.75, 32.37, 33.59, 43.89, 54.85, 122.07, 122.78, 122.91, 123.04, 123.14, 123.23, 123.28, 126.10, 126.34, 128.64, 129.38, 131.60, 133.99, 134.81, 134.90, 160.06, 163.38 br., 164.39 br., 177.70 (die NMR-Probe der empfindlichen Substanz enthält wegen Zersetzung zu den Edukten sowohl im ^{*1*}H NMR- als auch im ^{*13*}C NMR-Spektrum mehr Signale als erwartet. Insbesondere beobachtet man zusätzlich Signale des freien Önanthaldehyds (z.B.: ^{*1*}H NMR: 9.75 ppm, ^{*13*}C NMR: 202.86 ppm).). - UV (CHCl₃): λₘₐₓ (e) = 527 nm (78600), 491 (44600), 460 (11200). - Fluoreszenz (CHCl₃): λₘₐₓ = 535 nm, 576. - MS (70 eV); *m*/*z* (%): 684 (3), 683 (5) [M⁺], 614 (4), 613 (10), 598 (8), 587 (8), 586 (16), 574 (5), 573 (16), 572 (18) [M⁺ - C₇H₁₃N], 502 (6), 431 (5), 416 (6), 405 (8), 404 (10), 403 (5), 392 (16), 391 (58), 390 (100) [572 - C₁₃H₂₆], 375 (6), 374 (7), 373 (8), 346 (9), 345 (8), 83 (20), 82 (25), 69 (5), 55 (13), 54 (9). - C₄₄H₄₉N₃O₄ (683.9): Ber. C 77.28, H 7.22, N 6.14; Gef. C 77.86, H 7.23, N 6.27.

### Beispiel 16: N-(1-Hexyl-heptyl)-perylen-3,4;9,10-tetracarbonsäure-3,4-(methylimin)-imid-9,10-imid

50 mg (0.09 mmol) N-(1-Hexyl-heptyl)-perylen-3,4;9,10-tetracarbonsäure-3,4-hydrazid-9,10-imid und 3 ml (53 mmol) Acetaldehyd. Reaktionsdauer: 3 Tage bei 30 °C. Bei Bedarf wird dem Gemisch frischer Acetaldehyd zugeführt. - *R*_{f} (Kieselgel/ CHCl₃/ Ethanol (20 + 1)) = 0.70. - ¹H NMR (CDCl₃): δ = 0.81 (t, 6 H, 2 CH₃), 1.28 (m_{C}, 16 H, 8 CH₂), 1.88 (m_{C}, 2 H, 2 α-CH₂), 2.24 (m_{C}, 2 H, 2 α-CH₂), 5.16 (m_{C}, 1 H, NCH), 5.48 (s, 2 H, NH₂), 7.95 (t, 1 H, N=CH), 8.50 (m_{C}, 8 H, Perylen). (Aus dem Verhältnis der Signale bei 5.48 ppm (Edukt) und 7.95 ppm (Produkt) = 3 : 2 kann man einen Umsatz von 40% abschätzen.) - UV (CHCl₃): λₘₐₓ = 528 nm, 490, 460. - Fluoreszenz (CHCl₃): λₘₐₓ = 535 nm, 575. - MS (70 eV); *m*/*z* (%): 614 (3), 613 (7) [M⁺], 596 (2), 587 (3), 573 (4), 572 (9) [M⁺ - CH₃CN], 432 (8), 431 (4) [M⁺ - C₁₃H₂₆], 406 (8), 405 (14), 392 (10), 391 (45), 390 (100) [572 - C₁₃H₂₆], 376 (5), 346 (5), 345 (5), 55 (5).

### Beispiel 17: N-(1-Hexyl-heptyl)-perylen-3,4;9,10-tetracarbonsäure-3,4-(2-(4-methyl-pent-3-en)imin)-imid-9,10-imid

300 mg (0.50 mmol) N-(1-Hexyl-heptyl)-perylen-3,4;9,10-tetracarbonsäure-3,4-hydrazid-9,10-imid und 80 mg (0.80 mmol) frisch destilliertes Mesityloxid werden in 80 ml abs. Benzol 24 h zum Sieden erhitzt. Man destilliert das Benzol im Vakuum ab, fällt den Farbstoff mit Methanol und trocknet diesen anschließend bei 100 °C. Zur Reinigung wird das Rohprodukt mit abs. Chloroform/ abs. Aceton (10 + 1) an getrocknetem Kieselgel chromatographiert, wobei der fluoreszierende Farbstoff nach einem kurzen Vorlauf abgetrennt werden kann.

Ausb. 90 mg (90%). - *R*_{f} (Kieselgel/ CHCl₃/ Aceton (10 + 1)) = 0.82. - ¹H NMR (CDCl₃): δ = 0.83 (t, 6 H, 2 CH₃), 1.28 (m_{c}, 16 H, 8 CH₂), 1.90 (m_{c}, 2 H, 2 α-CH₂), 2.24 (m_{c} 2 H, 2 α-CH₂), 5.18 (m_{c}, 1 H, NCH), 6.01 (s, 1 H, C=CH), 8.50 (m_{c}, 8 H, Perylen). - ¹³C NMR (CDCl₃): δ = 14.02, 20.04, 21.26, 22.56, 26.93, 27.47, 29.20, 31.74, 32.36, 54.57, 122.57, 122.98, 123.10, 123.32, 126.10, 126.90, 129.20, 129.60, 131.59, 134.20, 134.86, 148.10, 159.52, 170.70. - UV (CHCl₃): λₘₐₓ = 527 nm, 491, 460. - Fluoreszenz (CHCl₃): λₘₐₓ = 534 nm, 576. - MS (70 eV); *m*/*z* (%): 667 (4) [M⁺], 628 (4), 627 (9), 613 (4), 612 (13), 573 (6), 572 (12), 555 (4), 446 (9), 445 (10), 431 (10), 430 (33), 404 (5), 403 (5), 392 (18), 391 (57), 390 (100), 389 (5), 376 (5), 375 (6), 374 (7), 373 (10), 362 (5), 361 (5), 347 (4), 346 (9), 345 (8), 302 (4), 95 (16), 55 (6).

### Beispiel 18: Fluoreszenz-Derivatisierung von Benzaldehyd

Eine festgelegte Menge einer Farbstoff-Lösung von N-(1-Butyl-pentyl)-perylen-3,4;9,10-tetracarbonsäure-3,4-hydrazid-9,10-imid wird jeweils vorgelegt, mit einer steigenden Menge einer Benzaldehyd-Lösung versetzt und auf ein konstantes Volumen aufgefüllt. Die beiden Komponenten werden 30 min unter Rückfluß gehalten. Danach mißt man die Fluoreszenzintensität. Außerdem muß auch eine Blindprobe von N-(1-Butyl-pentyl)-perylen-3,4;9,10-tetracarbonsäure-3,4-hydrazid-9,10-imid ebenfalls diesen Reaktionsbedingungen ausgesetzt werden, weil auch bei dieser die Fluoreszenz zunehmen kann.

Meßreihe 1 (Benzaldehyd) (Tab. 1): Einwaage des Farbstoffes N-(1-Butyl-pentyl)-perylen-3,4;9,10-tetracarbonsäure-3,4-hydrazid-9,10-imid (M = 531.6 g·mol⁻¹): 0.39 mg in 50 ml Chloroform. 2.00 ml (2.94 · 10⁻⁵ mmol) der Farbstoff-Lösung werden jeweils vorgelegt. Einwaage des Benzaldehyds (M = 106.1 g mol⁻¹): 100 mg in 50 ml Chloroform. Man entnimmt 2.00 ml dieser Lösung und verdünnt diese auf ein Volumen von 1.00 l. In 0.1 ml dieser Lösung befinden sich dann 0.366 · 10⁻⁵ mmol Benzaldehyd.

Meßreihe 2 (Tab. 2): Einwaage des Farbstoffes N-(1-Butyl-pentyl)-perylen-3,4;9,10-tetracarbonsäure-3,4-hydrazid-9,10-imid (M = 531.6 g mol⁻¹): 0.39 mg in 50 ml Chloroform. 2.00 ml (2.94 · 10⁻⁵ mmol) des Farbstoffes werden jeweils vorgelegt. Einwaage des Benzaldehyds (M = 106.1 g mol⁻¹): 99 mg in 50 ml Chloroform. Man entnimmt 2.00 ml dieser Lösung und verdünnt diese auf ein Volumen von 1 l. In 0.1 ml dieser Lösung befinden sich dann 0.38 10⁻⁵ mmol Benzaldehyd.

**Tab. 1: Fluoreszenz-Messung: Benzaldehyd - N-(1-Butyl-pentyl)-perylen-3,4;9,10-tetracarbonsäure-3,4-hydrazid-9,10-imid (Meßreihe 1)**

| Aldehyd-Lösung | | Aldehyd : Farbstoff | Fluoreszenz | Bemerkungen |
|---|---|---|---|---|
| ml | 10⁻⁵ mmol | mol : mol | Einheiten | |
| 0 | 0 | 0 : 1 | 4.5 | kalt |
| 0 | 0 | 0 : 1 | 5.0 | Rückfluß |
| 0.1 | 0.37 | 8 : 1 | 6.0 | |
| 0.2 | 0.75 | 4 : 1 | 6.0 | |
| 0.4 | 1.51 | 2 : 1 | 6.6 | |
| 0.8 | 3.02 | 1 : 1 | 6.2 | |
| 1.6 | 6.03 | 1 : 2 | 11 | |

**Tab. 2: Fluoreszenz-Messung: Benzaldehyd - N-(1-Butyl-pentyl)-perylen-3,4;9,10-tetracarbonsäure-3,4-hydrazid-9,10-imid (Meßreihe 2)**

| Aldehyd-Lösung | | Aldehyd : Farbstoff | Fluoreszenz | Bemerkungen |
|---|---|---|---|---|
| ml | 10⁻⁵ mmol | mol : mol | Einheiten | |
| 0 | 0 | ― | 5.0 | Rückfluß |
| 0.1 | 0.38 | 8 : 1 | 8.5 | |
| 0.2 | 0.75 | 4 : 1 | >>20 | |
| 0.3 | 1.13 | 2.5 : 1 | 8.5 | |
| 0.4 | 1.51 | 2 : 1 | 15 | |
| 0.5 | 1.89 | 1.5 : 1 | >>20 | |
| 0.6 | 2.26 | 1.3 : 1 | 13 | |
| 0.7 | 2.64 | 1.1 : 1 | 15.2 | |
| 0.8 | 3.02 | 1 : 1 | 16 | |

### Beispiel 19: Derivatisierung von Secologanin

Eine Mikrospatelspitze Perylen-3,4;9,10-tetracarbonsäure-3,4-hydrazid-9,10-dicarboximid wird mit einer Mikrospatelspitze Secologanin in 3 ml dest. Chloroform (Reaktionslösung säurefrei) bis zu 3 h bei 60 °C gerührt. Der Reaktionsverlauf kann dünnschicht-chromatographisch (Kieselgel/ Chloroform/ Ethanol (10 + 1)) verfolgt werden. - *R*_{f} (Kieselgel/ CHCl₃/Ethanol/ (10 + 1)) = 0.74 (nicht fluoreszierendes Edukt), *R*_{f} (Kieselgel/ CHCl₃/ Ethanol/(10.+.1)) = 0.16 (fluoreszierendes Hauptprodukt), *R*_{f} (Kieselgel/ CHCl₃/ Ethanol/ (10 + 1)) =0.77 (fluoreszierendes Nebenprodukt).

### Beispiel 20: N-(1-Octyl-nonyl)-N'-(N"-carbamidsäureethylester)-perylen-3,4;9,10-bis(dicarboximid)

220 mg (0.34 mmol) N-(1-Octyl-nonyl)-perylen-3,4;9,10-tetracarbonsäure-3,4-hydrazid-9,10-imid werden mit 40 mg (0.36 mmol) Chlorameisensäureethylester und 40 mg (0.40 mmol) Triethylamin versetzt und anschließend 3 h bei 60 °C gerührt. Nach dem Abkühlen wird das Reaktionsgemisch vorsichtig auf 150 ml Ethanol / Wasser (1 + 1) gegossen und 2 h heftig gerührt. Den ausgefallenen Niederschlag trennt man über eine D4-Fritte ab, wäscht diesen dreimal mit Wasser und trocknet ihn anschließend bei 100 °C. Das schon sehr reine Rohprodukt wird über Kieselgel / Chloroform / Ethanol (10 + 1) chromatographiert. Die einheitliche Farbstofffraktion versetzt man mit etwa 100 ml Methanol. Das Lösungsmittel-gemisch wird abdestilliert und das reine Produkt im Ölpumpenvakuum bei 60 °C getrocknet. Ausb. 150 mg (68%), Schmp. 277 - 278 °C. - *R*_{f} (Kieselgel/ CHCl₃/ Ethanol/ (10 + 1)) = 0.66. - *R*_{f} (Kieselgel/ CHCl₃/ 1-Butanol (40 + 1)) =0.27. - *R*_{f} (Kieselgel/ CHCl₃/ Triethylamin/ (40 + 1)) =0.17. - IR (KBr): ν = 2954 cm⁻¹ (m), 2926 (m), 2855 (m), 1718 (s), 1700 (s), 1660 (s), 1636 (m), 1616 (m), 1595 (s), 1580 (m), 1506 (w), 1465 (w), 1457 (w), 1404 (m), 1348 (m), 1305 (m), 1254 (m), 1175 (m), 810 (m), 750 (m), 668 (m). - ¹H NMR (CDCl₃): δ = 0.80 (t, 6 H, 2 CH₃), 1.28 (m_{C}, 27 H, 12 CH₂ + CH₃), 1.92 (m_{C}, 2 H, 2 α-CH₂), 2.25 (m_{C}, 2 H, 2 α-CH₂), 4.31 (d br., 2 H, OCH₂), 5.15 (m_{C}, 1 H, NCH), 7.17 (s br., 1 H, NH), 8.21 (d br., 2 H, Perylen), 8.31 (d br., 4 H, Perylen), 8.53 (d br., 2 H, Perylen). - ¹³C NMR (CDCl₃): δ = 14.06, 14.42, 22.62, 27.10, 29.26, 29.53, 31.82, 55.09, 62.92, 122.36, 122.72, 123.26, 125.85, 126.04, 128.92, 129.00, 129.10, 130.86, 131.69, 133.47, 134.87, 155.18, 161.40. - UV (CHCl₃): λₘₐₓ (ε) = 526 nm (82900), 490 (49900), 459 (18100). - Fluoreszenz (CHCl₃): λₘₐₓ = 535 nm, 574. - MS (70 eV); *m*/*z* (%): 716 (21), 715 (46) [M⁺], 698 (12) [M⁺ - OH], 669 (5), 480 (6), 479 (31), 478 (77), 477 (100) [M⁺ - C₁₇H₃₄], 433 (11), 432 (22), 431 (24), 414 (5), 407 (6), 406 (35), 405 (75), 391 (22), 390 (37), 388 (6), 377 (12), 376 (43), 347 (10), 320 (8), 319 (5). - C₄₄H₄₉N₃O₆ (715.8): Ber. C 73.82, H 6.90, N 5.87; Gef. C 73.81, H 6.94, N 5.80.

### Beispiel 21: N-(1-Hexyl-heptyl)-N'-(N"-carbamidsäureethylester)-perylen-3,4;9,10-bis(dicarboximid)

100 mg (0.17 mmol) N-(1-Hexyl-heptyl)-perylen-3,4;9,10-tetracarbonsäure-3,4-hydrazid-9,10-imid, 20 mg (0.18 mmol) Chlorameisensäureethylester und 20 mg (0.20 mmol) Triethylamin werden 3 h bei 60 °C zur Reaktion gebracht. Nach dem Abkühlen wird das Gemisch auf 50 ml Ethanol/ Wasser (1 + 1) gegossen und 2 h heftig gerührt. Den ausgefallenen Niederschlag trennt man mit einer D4-Fritte ab, wäscht ihn mit Wasser und trocknet bei 100 °C. - *R*_{f} (Kieselgel/ CHCl₃/ Ethanol/ (10 + 1)) = 0.66. - *R*_{f} (Kieselgel/ CHCl₃/ 1-Butanol/(40 + 1)) = 0.19. - *R*_{f} (Aluminiumoxid/ CHCl₃/ Ethanol/ (10 + 1)) = 0.68. - *R*_{f} (Aluminiumoxid/CHCl₃/ 1-Butanol/ (40 + 1)) = 0.34. - IR (KBr): ν = 2927 cm⁻¹ (m), 2857 (w), 1718 (m), 1700 (s), 1653 (m), 1636 (m), 1595 (s), 1577 (m), 1505 (w), 1457 (w), 1437 (w), 1420 (m), 1254 (m), 1176 (w), 1109 (w), 1043 (w), 809 (m). - ¹H NMR (CDCl₃): δ = 0.82 (t, 6 H, 2 CH₃), 1.28 (m_{C}, 16 H, 8 CH₂), 1.33 (s, 3 H, O-CH₂CH₃), 1.90 (m_{C}, 2 H, 2 α-CH₂), 2.25 (m_{C}, 2 H, 2 α-CH₂), 4.32 (q, 2 H, OCH₂), 5.16 (m_{C}, 1 H, NCH), 8.51 (m_{C}, 8 H, Perylen). - ¹³C NMR (CDCl₃): δ = 14.04, 14.41, 22.59, 27.01, 29.23, 31.77, 32.41, 55.03, 62.96, 122.47, 122.84, 123.37, 126.31, 129.20, 131.90, 133.68, 135.44, 155.17, 166.51.

### Beispiel 22: N-1-(Hexyl-heptyl)-N'-(phenyl)-perylen-3,4:9,10-bis(dicarboximid) (2g)

600 mg (1.04 mmol) N-(1-Hexyl-heptyl)-perylen-3,4:9,10-tetracarbonsäure-3,4-anhydrid-9,10-imid und 280 mg (3.0 mmol) dest. Anilin werden mit 100 mg (0.46 mmol) Zinkacetatdihydrat in 3 g Imidazol bei 150 °C 3 h lang gerührt. Das noch warme Gemisch wird vorsichtig mit 10 ml Ethanol verdünnt und der Kolbeninhalt mit mehreren Portionen Ethanol auf 100 ml 2 N Salzsäure gegossen. Man läßt 2 h bei Raumtemperatur rühren, saugt den ausgefallenen Niederschlag ab und wäscht ihn mehrmals mit Wasser/Methanol. Das so erhaltene Rohprodukt wird bei 100 °C getrocknet. Die Reinigung des Farbstoffes erfolgt chromatographisch über Kieselgel (Säule 40 · 4 cm) mit Chloroform als Laufmittel. Ausb. 510 mg (75%). - ¹H NMR (CDCl₃): δ = 0.81 (t, 6 H, 2 CH₃), 1.28 (m_{c}, 16 H, 8 CH₂), 1.88 (m_{c}, 2 H, 2 α-CH₂), 2.24 (m_{c}, 2 H, 2 α-CH₂), 5.16 (m_{c}, 1 H, NCH), 7.35 (m_{c}, 2 H, Phenyl), 7.53 (m_{c}, 3 H, Phenyl), 8.50 (m_{c}, 8 H, Perylen). - MS (70 eV); *m*/*z* (%): 649 (14), 648 (30) [M⁺], 631 (7), 479 (4), 469 (3), 468 (18), 467 (69), 466 (100) [M⁺ - C₁₃H₂₆], 465 (20), 449 (5), 422 (5), 421 (8).

### Beispiel 23: Hydrazinolyse von 2g

500 mg (0.77 mmol) **2g** (aus Beispiel 22) werden mit 1.0 ml (20.0 mmol) Hydrazinhydrat (100proz) in 10 ml *tert*.-Butylalkohol gerührt und zum Sieden erhitzt. Nach 20 h rührt man den Kolbeninhalt in Wasser ein und läßt das Gemenge 1 h lang rühren. Der ausgefallene Niederschlag wird abgesaugt, mit Wasser gewaschen und bei 120°C getrocknet. Das Rohprodukt wird einmal über Kieselgel/Chloroform/ Ethanol (10 + 1) chromatographiert und kann auf Grund seiner spektroskopischen Daten als N-(1-Hexylheptyl)-perylen-3,4;9,10-tetracarbonsäure-3,4-hydrazid-9,10-imid identifiziert werden.

### Beispiel 24: N-(1-Hexyl-heptyl)-perylen-3,4;9,10-tetracarbonsäure-3,4-(2-hydrazopyridinyl)-imid-9,10-imid

250 mg (0.44 mmol) N-(1-Hexyl-heptyl)-perylen-3,4;9,10-tetracarbonsäure-3,4-anhydrid-9,10-imid und 200 mg (1.80 mmol) 2-Hydrazopyridin werden in 20 ml 2-Methoxyethanol 20 h lang bei Raumtemperatur gerührt. Durch Zugabe von weiteren 20 mg (0.18 mmol) 2-Hydrazo-pyridin und Erhöhung der Reaktionstemperatur auf 70 °C läßt sich die Reaktion nicht weiter vervollständigen und wird deshalb nach 4 h abgebrochen. Man entfernt das Lösungsmittel im Vakuum und chromatographiert das Rohprodukt über Aluminiumoxid/ Chloroform/Ethanol (10 + 1). Die weitere Reinigung erfolgt über Aluminiumoxid (Säule 50 · 4 cm)/ Chloroform (Flashchromatographie) und Kieselgel (Säule 50 · 4 cm)/ Chloroform/ Eisessig (10 + 1). Das Laufmittel wird am Rotationsverdampfer abgezogen, der Rückstand intensiv mit Wasser/ Methanol gewaschen und anschließend im Vakuum bei 60 °C getrocknet. Ausb. 70 mg (24%), Schmp. > 350 °C. - *R*_{f} (Kieselgel/ CHCl₃/ Ethanol (10 + 1)) = 0.57. - *R*_{f} (Kieselgel/ CHCl₃/ Eisessig (10 + 1)) = 0.48. - IR (KBr): v = 3441 cm⁻¹ (m br.), 2956 (m), 2927 (m), 2856 (m), 1718 (m), 1700 (s), 1685 (m br.), 1658 (s), 1594 (s), 1579 (m), 1506 (w), 1476 (w), 1459 (w), 1437 (m), 1404 (m), 1355 (m), 1346 (s), 1319 (w), 1253 (m br.), 1175 (m), 1110 (w), 1090 (w), 1035 (w), 966 (w), 855 (w), 810 (s), 746(m). - ¹H NMR (CDCl₃): δ = 0.81 (t, 6 H, 2 CH₃), 1.28 (m_{c}, 16 H, 8 CH₂), 1.87 (m_{c}, 2 H, 2 α-CH₂), 2.26 (m_{c}, 2 H, 2 α-CH₂), 5.17 (m_{c}, 1 H, NCH), 6.85 (m_{c}, 2 H, Aromat), 7.57 (t, ³*J* = 7.8 Hz, ⁴*J* = 1 Hz, 1 H, Aromat), 8.14 (d, ³*J* = 5.0 Hz, 1 H, Aromat), 8.58 (d, ³*J* = 8.1 Hz, 2 H, Perylen), 8.59 (d, ³*J* = 8.0 Hz, 2 H, Perylen), 8.67 (d, ³*J* = 8.0 Hz, 4 H, Perylen). - ¹³C NMR (CDCl₃): δ = 14.02, 22.57, 26.94, 29.20, 31.75, 32.37, 54.90, 108.82, 117.65, 122.93, 123.44, 126.30, 126.71, 129.49, 132.20, 134.10, 135.36, 137.99, 148.21, 157.02, 162.45. - UV (CHCl₃): λₘₐₓ (ε) = 527 nm (79100), 490 (48100), 459 (17700). - Fluoreszenz (CHCl₃): λₘₐₓ = 542 nm, 577. - MS (70 eV); *m*/*z* (%): 666 (5), 665 (20), 664 (41) [M⁺], 648 (4), 647 (9) [M⁺ - OH], 619 (6), 495 (4), 484 (17), 483 (41), 482 (39) [M⁺ - C₁₃H₂₆], 465 (7), 439 (11), 438 (45), 437 (100) [M⁺ - C₁₃H₂₆ - CO], 392 (4), 390 (5),319 (5), 94 (5), 55 (5). - C₄₂H₄₀N₄O₄ (664.8): Ber. C 75.88, H 6.06, N 8.43; Gef. C 75.94, H 5.99, N 8.22.

### (E) Herstellung eines erfindungsgemässen Formamids Ia

### Beispiel 38: N-(1-Heptyl-octyl)-N'-(N"-formamidyl)-perylen-3,4:9,10-bis(dicarboximid)

0.23 g (0.38 mmol) N-(1-Heptyl-octyl)-perylen-3,4:9,10-tetracarbonsäure-3,4-hydrazid-9,10-imid werden mit 20 ml 99proz. Ameisensäure überschichtet und bei 70 °C 6 - 18 h gerührt. Das Edukt löst sich langsam. Das Fortschreiten der Reaktion kann man dünnschicht-chromatographisch (Kieselgel/ Chloroform/ Ethanol (10 + 1)) verfolgen. Außerdem nimmt die Fluoreszenz der Lösung deutlich zu. Das Reaktionsprodukt wird in 200 ml Methanol/ Wasser (1 + 1) eingetragen und 15 min gerührt. Den ausgefallenen Niederschlag wäscht man mit viel Wasser neutral und trocknet ihn anschließend bei 100 °C 1 h lang. Ausb. 0.25 g. Das zersetzliche Produkt fällt dabei in hoher Reinheit an und kann für weitere Umsetzungen eingesetzt werden. Für die Elementaranalyse muß man den Farbstoff jedoch chromatographisch über Kieselgel/ Toluol/ Ethanol (10 + 1) reinigen. Wie oben erwähnt, ist der Farbstoff zersetzlich. Das Laufmittel muß deswegen im Vakuum bei möglichst niedriger Wasserbadtemperatur abdestilliert werden. Ausb. 0.14 g (58%) nach Chromatographie, Schmp. 339 - 341 °C. - *R*_{f} (Kieselgel/CHCl₃/Ethanol = (10 + 1)) = 0.40. - *R*_{f} (Kieselgel/Toluol/Ethanol = (10 + 1)) = 0.52. - IR (KBr): ν = 3441 cm⁻¹ (s br.), 2958 (m), 2927 (m), 2855 (m), 1725 (m), 1700 (s br.), 1685 (m), 1660 (s), 1594 (s), 1579 (m), 1508 (w), 1460 (w), 1435 (w), 1405 (m), 1355 (m sh), 1347 (m), 1305 (w), 1255 (m br.), 1202 (w), 1176 (w), 855 (w), 809 (m), 800 (w), 740 (m). - ¹H NMR (CDCl₃): δ = 0.81 (t, 6 H, 2 CH₃), 1.28 (m_{c}, 20 H, 10 CH₂), 1.90 (m_{c}, 2 H, 2 α-CH₂), 2.23 (m_{c}, 2 H, 2 α-CH₂), 5.15 (m_{c}, 1 H, NCH), 7.97 (s, 1 H, NH), 8.41 (d, *J* = 8.1 Hz, 2 H, Perylen), 8.46 (d, *J* = 7.9 Hz, 2 H, Perylen), 8.51 (d br., *J* = 7.5 Hz, 2 H, Perylen), 8.51 (s, 1 H, H-RC=O), 8.59 (s br., 2 H, Perylen). - ¹³C NMR (CDCl₃): δ = 14.05, 22.60, 27.04, 29.21, 29.51, 31.79, 32.35, 55.05, 122.23, 122.92, 123.51, 129.27, 132.08, 133.66, 135.37, 158.87, 160.85. - UV (CHCl₃): λₘₐₓ (ε) = 527 nm (79700), 490 (48600), 460 (17700). - Fluoreszenz (CHCl₃): λₘₐₓ = 535 nm, 576. - MS (70 eV); *m*/*z* (%): 644 (8), 643 (22) [M⁺], 616 (8), 615 (20) [M⁺ - CO], 601 (7), 600 (17), 505 (5), 435 (7), 434 (23), 433 (4) [M⁺ - C₁₅H₃₀], 418 (9), 407 (12), 406 (54), 405 (100) [615 - C₁₅H₃₀], 392 (7), 391 (33), 390 (58), 377 (6), 376 (25), 321 (8), 69 (5), 55 (6). - C₄₀H₄₁N₃O₅ (643.8): Ber. C 74.63, H 6.42, N 6.53; Gef. C 73.75, H 6.49, N 6.51.

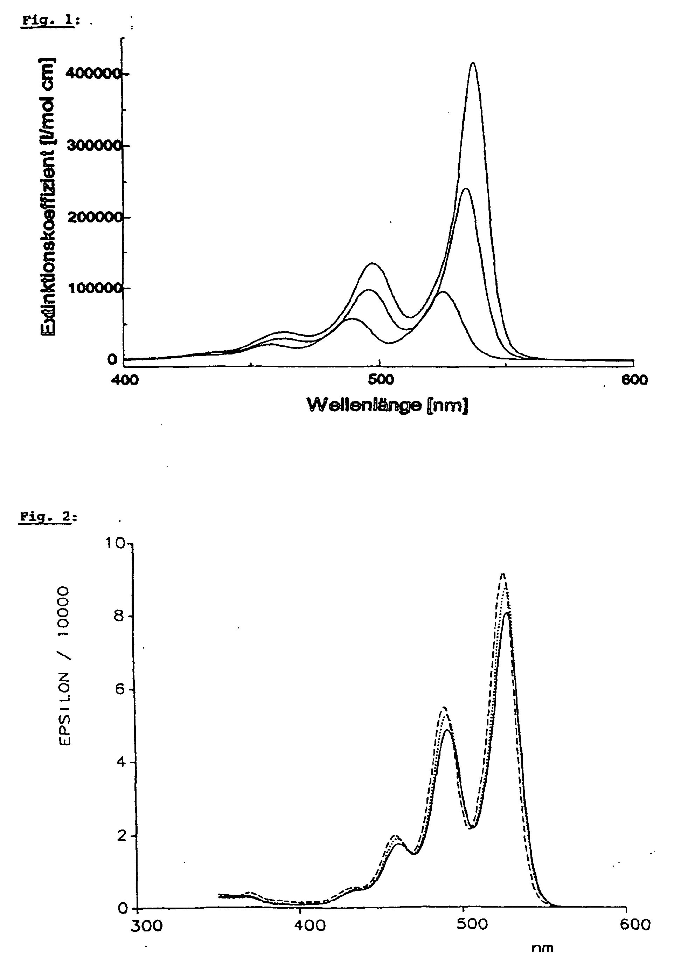

Abb. 2 zeigt einen Vergleich der UV/Vis-Spektren des Aminoperylenfarbstoffs 2d (aus Bsp. 5) (R' = 1-Octylnonyl) (―), des Perylenhydrazons 3 (aus Bsp. 8) (R' = 1-Octylnonyl, R¹⁶ = H, R¹⁷ = C₆H₅₎ (···) und des Perylenbisimids der Formel VI (R¹ = R¹⁸ = 1-Octylnonyl) (---) in Chloroform.

## Patentansprüche

1. Perylenhydrazid-imide der allgemeinen Formel I 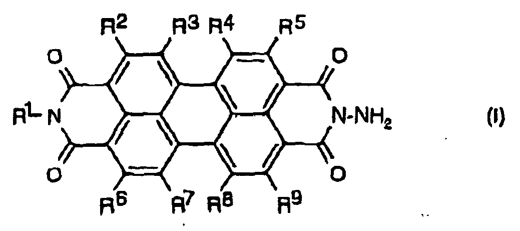 worin R¹ 1-(C₁-C₈-Alkyl)-C₂-C₁₀alkyl oder C₁-C₈-alkylsubstituiertes Phenyl ist, R², R³, R⁴, R⁵, R⁸, R⁷, R⁸, R⁹ gleich oder verschieden für Wasserstoff, oder ein Rest bis acht Reste für einen Rest stehen, ausgewählt aus der Gruppe, bestehend aus einem unsubstituierten oder durch Halogen, Cyano oder C₁-C₁₈-Alkyl substituierten Phenyl, wobei C₁-C₁₈-Alkyl gegebenenfalls durch Fluor, Cyano, -OCOR¹³, -OR¹¹, -OCOOR¹³, -CON(R¹¹)(R¹²) oder -OCONHR¹³, substituiert ist, worin R¹³ C₁-C₁₈-Alkyl, C₈-C₁₀-Aryl, Pyridyl, Pyrimidyl, Pyrazlnyl, Triazinyl, Furanyl, Pyrrolyl, Thiophenyl, Chinolyl, Isochinolyl oder Coumarinyl, bedeutet, R₁₁ und R₁₂ Wasserstoff, unsubstituiertes oder durch die Cyano- oder Hydroxi-Gruppe substituiertes C₁-C₁₈-Alkyl sind, oder R¹¹ und R¹² gemeinsam oder gegebenenfalls zusätzlich zusammen mit mindestens einem der anderen Reste R² bis R⁸ einen Pyridin-, Pyrrol-, Furan- oder Pyranring bilden, einem unsubstituierten oder durch Halogen, Cyano oder C₁-C₁₈-Alkyl substituierten Diphenyl, wobei C₁-C₁₈-Alkyl gegebenenfalls durch Fluor. Cyano, -OCOR¹³, -OR¹¹, -OCOOR¹², -CON(R¹¹)(R¹²) oder -OCONHR¹³, worin R¹³ C₁-C₁₈-Alkyl, C₈-C₁₀-Aryl, Pyridyl, Pyrimidyl, Pyrazinyl, Trlazinyl, Furanyl, Pyrrolyl, Thiophenyl, Chinolyl, Isochinolyl oder Coumarinyl, bedeutet, R₁₁ und R₁₂ Wasserstoff, unsubstituiertes oder durch die Cyano- oder Hydroxi-Gruppe substituiertes C₁-C₁₈-Alkyl sind, oder R¹¹ und R¹² gemeinsam oder gegebenenfalls zusätzlich zusammen mit mindestens einem der anderen Reste R² bis R⁹ einen Pyridin-, Pyrrol-, Furan- oder Pyranring bilden, einem unsubstituierten oder durch Halogen, Cyano oder C₁-C₁₈-Alkyl substituierten Naphthyl, wobei C₁-C₁₈-Alkyl gegebenenfalls durch Fluor, Cyano, -OCOR¹³, -OR¹¹, -OCOOR¹³, -CON(R¹¹)(R¹²) oder -OCONHR¹³, worin R¹³ C₁-C₁₈-Alkyl, C₆-C₁₀-Aryl, Pyridyl, Pyrimidyl, Pyrazinyl, Triazinyl, Furanyl, Pyrrolyl, Thiophenyl, Chinolyl, Isochinolyl oder Coumarinyl, bedeutet, R₁₁ und R₁₂ Wasserstoff, unsubstituiertes oder durch die Cyano- oder Hydroxi-Gruppe substituiertes C₁-C₁₈-Alkyl sind, oder R¹¹ und R¹² gemeinsam oder gegebenenfalls zusätzlich zusammen mit mindestens einem der anderen Reste R² bis R⁹ einen Pyridin-, Pyrrol-, Furan- oder Pyranring bilden, Pyridyl, Pyrimidyl, Pyrazinyl, Triazinyl, Furanyl, Pyrrolyl, Thiophenyl, Chinolyl, Isochinolyl, Coumarinyl, Benzofuranyl, Benzimidazolyl, Benzoxazolyl, Dibenzfuranyl, Benzothiophenyl, Dibenzothiophenyl, Indolyl, Carbazolyl, Pyrazolyl, Imidazolyl, Oxazolyl, Isoxazolyl, Thiazolyl, Indazolyl, Benzthiazolyl, Pyridazinyl, Cinnolyl, Chinazolyl, Chinoxalyl, Phthalazinyl, Phthalazindionyl, Phthalimidyl, Chromonyl, Naphtholactamyl, Benzopyridonyl, ortho-Sulfobenzimidyl, Maleinimidyl, Naphthyridinyl, Benzimidazolonyl, Benzoxazolonyl, Benzthiazolonyl, Benzthiazolinyl, Chinazolonyl, Pyrimidyl, Chinoxalonyl, Phthalazonyl, Dioxapyrimidinyl, Pyridonyl, Isochinolonyl, Isothiazolyl, Benzisoxazolyl, Benzisothiazolyl, Indazolonyl, Acridinyl, Acridonyl, Chinazolindionyl, Benzoxazindlonyl, Benzoxazinonyl oder Phthalimidyl, Halogen, unsubstituiertern oder durch Fluor, Cyano, -OCOR¹³, -OR¹¹, -OCOOR¹³, -CON(R¹¹)(R¹²) oder -OCONHR¹³, substituiertern C₁-C₁₈-Alkyl, -OR¹⁰, -CN, -NR¹¹R¹², -COR¹³, -NR¹⁴COR¹³, -NR¹⁰COOR¹³; -NR¹⁰CONR¹¹R¹², -NHSO₂R¹³, -SO₂R¹³, -SOR¹³, -SO₂OR¹³, -CONR¹¹R¹², -SO₂NR¹¹R¹², -N=NR¹⁵, -OCOR¹³ und -OCONHR¹³, wobei je zwei benachbarte Reste zusammen einen 5-oder 6-gliedrigen carbocyclischen oder heterocyclischen Ring bilden können, wobei R¹³ C₁-C₁₈-Alkyl, C₆-C₁₀-Aryl oder unsubstituiertes oder durch Halogen, C₁-C₄-Alkyl, oder C₁-C₄-Alkoxi substituiertes Benzyl oder einen fünf- bis siebengliedrigen heterocyclischen Rest bedeutet, R¹¹ und R¹² unabhängig voneinander für Wasserstoff, unsubstituiertes oder mit Cyano- oder Hydroxi-Gruppen substituiertes C₁-C₁₈-Alkyl, C₃- bis C₂₄-Cycloalkyl, C₆-C₁₀-Aryl oder 5- bis 7-gliedriges Heteroaryl stehen, oder worin R¹¹ und R¹² gemeinsam zusammen oder gegebenenfalls zusätzlich zusammen mit mindestens einem der anderen Reste R² bis R⁸ einen 5- oder 6-gliedrigen carbocyclischen oder heterocyclischen Ring bilden, R¹⁰ für Wasserstoff, C₁-C₁₈-Alkyl, C₃- bis C₂₄-Cycloalkyl, C₈-C₁₀-Aryl oder 5- bis 7-gliedriges Heteroaryl steht, R¹⁴ für Wasserstoff, unsubstituiertes oder mit Cyano-, Hydroxi- oder C₁-C₄-Alkoxicarbonyl-Gruppen substituiertes C₁-C₁₈-Alkyl, C₃- bis C₂₄-Cycloalkyl, C₁-C₄-Alkylaryl, unsubstituiertes oder mit Halogen, C₁-C₄-Alkyl- oder C₁-C₄-Alkoxigruppen substituiertes C₈-C₁₀-Aryl, oder einen 5- bis 7-gliedrigen Heterocyclus steht, und R¹⁵ für unsubstituiertes oder mit Halogen, C₁-C₄-Alkyl- oder C₁-C₄-Alkoxigruppen substituier-tes C₈-C₁₀-Aryl steht.

2. Perylenhydrazid-imide der Fomlel I gemäss Anspruch 1, worin R₁ 1-Methyl-ethyl, 1-Ethyl-n-propyl, 1-n-Propyl-n-butyl, 1-n-Butyl-n-pentyl, 1-n-Hexyl-1-heptyl, 1-n-Heptyl-1-n-octyl, 1-n-Octyl-1-n-nonyl, 1-n-Nonyl-1-decyl, 2,6-Di-tert.-butylphenyl oder 2,5-Di-tert.-butylphenyl ist und R², R³, R⁴, R⁵, R⁶, R⁷, R⁸, R⁸ Wasserstoff sind.

3. Verfahren zur Herstellung der Perylenhydrazid-imide I durch (a) Umsetzung von Perylenanhydridimiden der allgemeinen Formel V 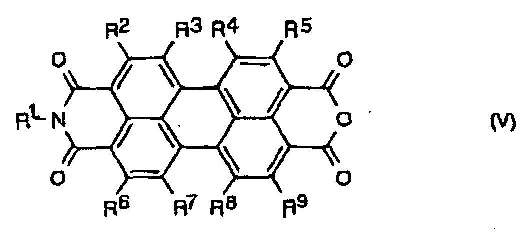 mit Hydrazin oder Hydrazin-lleferenden Verbindungen, oder (b) durch Hydrazinolyse von Perylen-3,4;9,10-tetracarbonsäurebisimiden der allgemeinen Formel (VI) 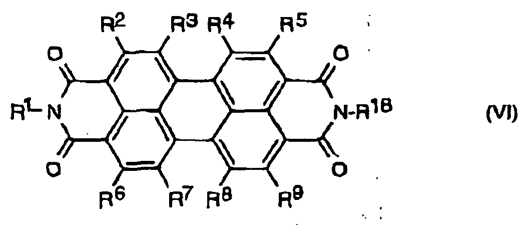 wobei R¹⁸ die gleiche Bedeutung wie R¹ hat, jedoch nicht notwendigerweise R¹ und R¹⁸ gleichzeitig die gleichen Substituenten tragen müssen.

4. Verwendung der Perylenhydrazid-imide I zum Nachweis von Carbonyl-verbindungen, Metallsalzen, Protonensäuren und Acylierungsmitteln.

5. Perylen-hydrazone der allgemeinen Formel II 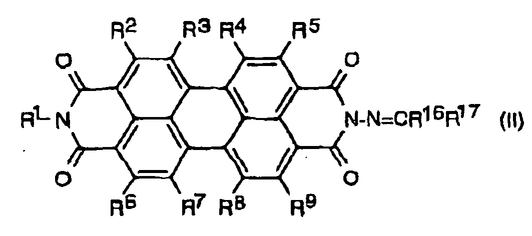 worin R¹⁸ und R¹⁷ gleich oder verschieden sind und die gleiche Bedeutung wie die Reste R² bis R⁸ haben.

6. Verfahren zur Herstellung der Forylenhydrazone II gemäß Anspruch 5, **dadurch gekennzeichnet, daß** man ein Perylenhydrazid-imid I gemäß Anspruch 1 mit einer Carbonylverbindung, R¹⁶R¹⁷C=O zur Reaktion bringt.

7. Verfahren zum Nachweis von Carbonylverbindungen durch Umsetzung einer Carbonylverbindung mit einem Hydrazid, **dadurch gekennzeichnet, daß** man ein Perylenhydraztd-imid I gemäß Anspruch 1 mit einer Carbonylverbindung R¹⁶R¹⁷C=O zur Fieaktion bringt und das entstandene Perylenhydrazon II spektroskopisch oder chromatographisch analysiert.

8. Formamide Ia 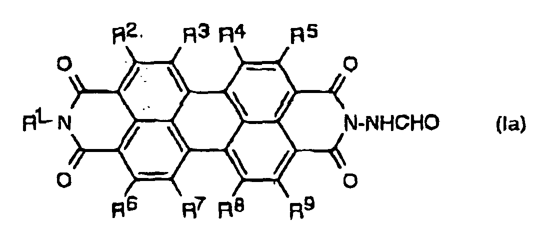 in der die Reste R¹ bis R⁹ die In Anspruch 1 angegebene Bedeutung haben.

9. Verfahren zur Herstellung der Formamide Ia durch Umsetzung der Perylenhydrazid-imide I mit Ameisensäure oder Ameisensäurederivaten.

10. Verwendung der Perylenderivate I gemäß Anspruch 1, und II gemäß Anspruch 5 als Farbmittel zur Masse-Färbung von Polymeren, als Küpenfarbstoffe, als Beizenfarbstoffe, zur Herstellung von Farben, Lacken, insbesondere Automobillacken, Anstrichstoffen, Papierfarben, Druckfarben, Tinten, insbesondere zum Einsatz in Tintenstrahldruckern, für Mal- und Schreib-Zwecke, sowie in der Elektrophotographie z.B. für Trockenkopiersysteme (Xerox-Verfahren) und Laserdrucker, für Sicherheitsmarkierungs-Zwecke, als Zusatz zu Farbmitteln wie Pigmenten und Farbstoffen, bei denen eine bestimmte Farbnuance erzielt werden soll, zum Markieren von Gegenständen zum maschinellen Erkennen dieser Gegenstände über die Fluoreszenz, zur Frequenzumsetzung von Licht, zur Herstellung von passiven Anzeigeelementen für vielerlei Anzeige-, Hinwels- und Markierungszwecke, als Ausgangsmaterial für supraleitende organische Materialien, zur Feststoff-Fluoreszenz-Markierung, für dekorative und künstlerische Zwecke, zu Tracer-Zwecken, als Fluoreszenzfarbstoffe in hochempfindlichen Nachweisverfahren, als Farbstoffe oder Fluoreszenzfarbstoffe in optischen Lichtsammelsystemen, in Fluoreszenz-Solarkollektoren, in Fluoreszenz-aktivierten Displays, in Kaltlichtquellen zur lichtinduzierten Polymerisation zur Darstellung von Kunststoffen, zur Materialprüfung, in Photoleitern, in fotografischen Verfahren, in Anzeige-, Beisuchtungs- oder Bildwandlersystemen, als Teil einer integrierten Halbleiterschaltung, die Farbstoffe als solche oder in Verbindung mit anderen Halbleitern enthalten, in Chemilumineszenzsystemen, in Lumineszenzimmunassays oder anderen Luminaszenznachweisverfahren, als Signalfarben, in Farbstoff-Lasern, als optisches Speichermedium, und als Rheologleverbesserer.

## Claims

1. A perylene hydrazide imide of the general formula I 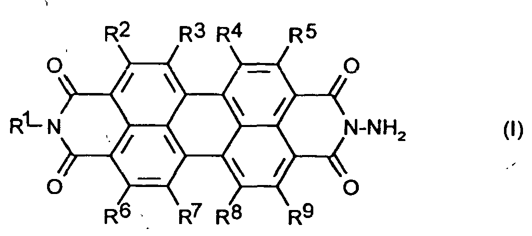 wherein R¹ is 1-(C₁-C₆alkyl)-C₂-C₁₀alkyl or C₁-C₆alkyl-substituted phenyl, R², R³, R⁴, R⁵, R⁶, R⁷, R⁸ and R⁹ are identical or different and are each hydrogen, or from one to eight of those radicals are a radical selected from the group consisting of an unsubstituted or halo-, cyano- or C₁-C₁₈alkyl-substituted phenyl, C₁-C₁₈alkyl being unsubstituted or substituted by fluorine, cyano, -OCOR¹³, -OR¹¹, -OCOOR¹³, -CON(R¹¹)(R¹²) or by -OCONHR¹³, wherein R¹³ is C₁-C₁₈alkyl, C₆-C₁₀aryl, pyridyl, pyrimidyl, pyrazinyl, triazinyl, furanyl, pyrrolyl, thiophenyl, quinolyl, isoquinolyl or coumarinyl, R¹¹ and R¹² are hydrogen, or C₁-C₁₈alkyl that is unsubstituted or substituted by the cyano or hydroxy group, or R¹¹ and R¹² together, or, as the case may be, with at least one of the other radicals R² to R⁹, form a pyridine, pyrrole, furan or pyran ring; an unsubstituted or halo-, cyano- or C₁-C₁₈alkyl-substituted diphenyl, C₁-C₁₈alkyl being unsubstituted or substituted by fluorine, cyano, -OCOR¹³, -OR¹¹, -OCOOR¹³, -CON(R¹¹)(R¹²) or by -OCONHR¹³, wherein R¹³ is C₁-C₁₈alkyl, C₆-C₁₀aryl, pyridyl, pyrimidyl, pyrazinyl, triazinyl, furanyl, pyrrolyl, thiophenyl, quinolyl, isoquinolyl or coumarinyl, R¹¹ and R¹² are hydrogen, or C₁-C₁₈alkyl that is unsubstituted or substituted by the cyano or by the hydroxy group, or R¹¹ and R¹² together, or, as the case may be, with at least one of the other radicals R² to R⁹, form a pyridine, pyrrole, furan or pyran ring; an unsubstituted or halo-, cyano- or C₁-C₁₈alkyl-substituted naphthyl, C₁-C₁₈alkyl being unsubstituted or substituted by fluorine, cyano, -OCOR¹³, -OR¹¹, -OCOOR¹³, -CON(R¹¹)(R¹²) or by -OCONHR¹³, wherein R¹³ is C₁-C₁₆alkyl, C₆-C₁₀aryl, pyridyl, pyrimidyl, pyrazinyl, triazinyl, furanyl, pyrrolyl, thiophenyl, quinolyl, isoquinolyl or coumarinyl, R¹¹ and R¹² are hydrogen, or C₁-C₁₈alkyl that is unsubstituted or substituted by the cyano or hydroxy group, or R¹¹ and R¹² together, or, as the case may be, with at least one of the other radicals R² to R⁹, form a pyridine, pyrrole, furan or pyran ring; pyridyl; pyrimidyl; pyrazinyl; triazinyl; furanyl; pyrrolyl; thiophenyl; quinolyl; isoquinolyl; coumarinyl; benzofuranyl; benzimidazolyl; benzoxazolyl; dibenzofuranyl; benzothiophenyl; dibenzothiophenyl; indolyl; carbazolyl; pyrazolyl; imidazolyl; oxazolyl; isoxazolyl; thiazolyl; indazolyl; benzothiazolyl; pyridazinyl; cinnolyl; quinazolyl; quinoxalyl; phthalazinyl; phthalazinedionyl; phthalimidyl; chromonyl; naphtholactamyl; benzopyridonyl; ortho-sulfobenzimidyl; maleimidyl; naphthyridinyl; benzimidazolonyl; benzoxazolonyl; benzothiazolonyl; benzothiazolinyl; quinazolonyl; pyrimidyl; quinoxalonyl; phthalazonyl; dioxapyrimidinyl; pyridonyl; isoquinolonyl; isothiazolyl; benzisoxazolyl; benzisothiazolyl; indazolonyl; acridinyl; acridonyl; quinazolinedionyl; benzoxazinedionyl; benzoxazinonyl; phthalimidyl; halogen; C₁-C₁₈alkyl that is unsubstituted or substituted by fluorine, cyano, -OCOR¹³, -OR¹¹, OCOOR¹³, -CON(R¹¹)(R¹²) or by -OCONHR¹³; -OR¹⁰; -CN; -NR¹¹R¹²; -COR¹³; -NR¹⁴COR¹³; -NR¹⁰COOR¹³; -NR¹⁰CONR¹¹R¹²; -NHSO₂R¹³; -SO₂R¹³; -SOR¹³; -SO₂OR¹³; -CONR¹¹R¹²; -SO₂NR¹¹R¹²; -N=NR¹⁵; -OCOR¹³ and -OCONHR¹³, it being possible for two adjacent radicals together to form a 5- or 6-membered carbocyclic or heterocyclic ring, wherein R¹³ is C₁-C₁₈alkyl, C₆-C₁₀aryl, or benzyl that is unsubstituted or substituted by halogen, C₁-C₄alkyl or by C₁-C₄alkoxy, or is a 5- to 7-membered heterocyclic radical, R¹¹ and R¹² are each independently of the other hydrogen, C₁-C₁₈alkyl that is unsubstituted or substituted by cyano or hydroxy groups, C₃- to C₂₄-cycloalkyl, C₆-C₁₀aryl or 5- to 7-membered heteroaryl, or R¹¹ and R¹² together, or, as the case may be, with at least one of the other radicals R² to R⁹, form a 5- or 6-membered carbocyclic or heterocyclic ring, R¹⁰ is hydrogen, C₁-C₁₈alkyl, C₃- to C₂₄-cycloalkyl, C₆-C₁₀aryl or 5- to 7-membered heteroaryl, R¹⁴ is hydrogen, C₁-C₁₈alkyl that is unsubstituted or substituted by cyano, hydroxy or C₁-C₄alkoxycarbonyl groups, C₃- to C₂₄-cycloalkyl, C₁-C₄alkylaryl, C₆-C₁₀aryl that is unsubstituted or substituted by halogen, C₁-C₄alkyl or C₁-C₄alkoxy groups, or a 5- to 7-membered heterocycle, and R¹⁵ is C₆-C₁₀aryl that is unsubstituted or substituted by halogen, C₁-C₄alkyl or C₁-C₄alkoxy groups.

2. A perylene hydrazide imide of formula I according to claim 1, wherein R₁ is 1-methyl-ethyl, 1-ethyl-n-propyl, 1-n-propyl-n-butyl, 1-n-butyl-n-pentyl, 1-n-hexyl-1-heptyl, 1-n-heptyl-1-n-octyl, 1-n-octyl-1-n-nonyl, 1-n-nonyl-1-decyl, 2,6-di-tert-butylphenyl or 2,5-di-tert-butylphenyl and R², R³, R⁴, R⁵, R⁶, R⁷, R⁸ and R⁹ are hydrogen.

3. A process for the preparation of a perylene hydrazide imide I by (a) reaction of a perylene anhydride imide of the general formula V 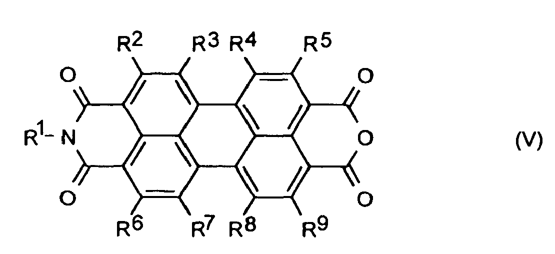 with hydrazine or a hydrazine-yielding compound, or by (b) hydrazinolysis of a perylene-3,4:9,10-tetracarboxylic acid bisimide of the general formula (VI) 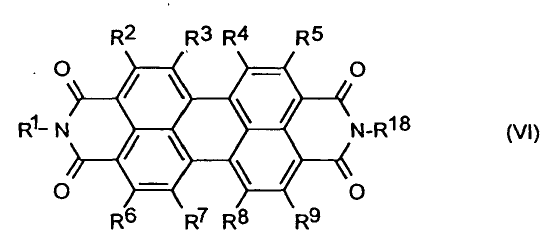 wherein R¹⁸ has the same definition as R¹ but R¹ and R¹⁸ need not necessarily carry the same substituents simultaneously.

4. The use of a perylene hydrazide imide I for the detection of carbonyl compounds, metal salts, protonic acids and acylating agents.

5. A perylene hydrazone of the general formula II 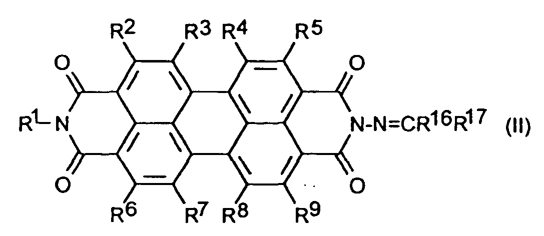 wherein R¹⁶ and R¹⁷ are identical or different and have the same definitions as the radicals R² to R⁹.

6. A process for the preparation of a perylene hydrazone II according to claim 5, which comprises reacting a perylene hydrazide imide I according to claim 1 with a carbonyl compound R¹⁶R¹⁷C=O.

7. A method of identifying carbonyl compounds by reacting a carbonyl compound with a hydrazide, which comprises reacting a perylene hydrazide imide I according to claim 1 with a carbonyl compound R¹⁶R¹⁷C=O and analysing the resulting perylene hydrazone II by spectroscopy or chromatography.

8. A formamide Ia 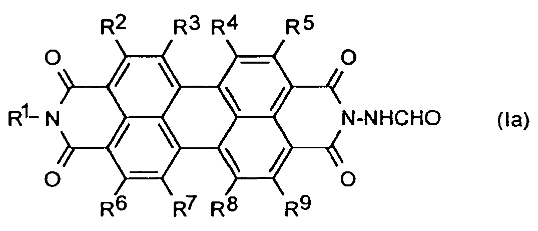 wherein the radicals R¹ to R⁹ are as defined in claim 1.

9. A process for the preparation of a formamide Ia by reaction of a perylene hydrazide imide I with formic acid or a formic acid derivative.

10. The use of perylene derivatives I according to claim 1, and II according to claim 5 as colourants for the melt colouration of polymers, as vat dyes, as mordant dyes, in the preparation of paints, lacquers, especially automotive lacquers, coating compositions, paper dyes, printing inks, inks, especially for use in ink-jet printers, for drawing and writing purposes, and in electrophotography, for example for dry-copying systems (Xerox process) and laser printers, for security-marking purposes, as an additive to colourants, such as pigments and dyes, in which a particular shade of colour is to be achieved, for labelling objects for the purpose of mechanically recognising those objects by means of the fluorescence, for the frequency conversion of light, for the production of passive display elements for a wide variety of display, information and labelling purposes, as starting materials for supraconducting organic materials, for solids fluorescent labelling, for decorative and artistic purposes, for tracer purposes, as fluorescent dyes in highly sensitive detection methods, as dyes or fluorescent dyes in optical light-collecting systems, in fluorescent solar collectors, in fluorescence-activated displays, in cold light sources for light-induced polymerisation in the preparation of plastics, for materials' testing, in photoconductors, in photographic processes, in display, illumination or image-converting systems, as part of an integrated semiconductor circuit, which contain dyes as such or in conjunction with other semiconductors, in chemiluminesceat systems, in luminescent immunoassays or other luminescent detection methods, as highlighter inks, in dye lasers, as optical storage media, and as rheology improvers.

## Revendications

1. Pérylènehydrazide-imides de formule générale I 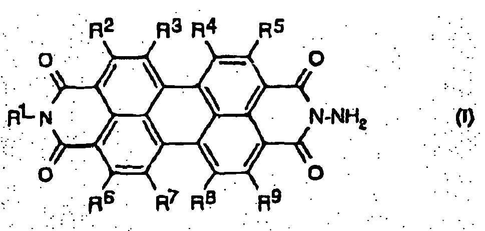 dans laquelle R¹ représente un groupe 1-(alkyle en C₁ à C₈)-(alkyle en C₂ à C₁₀) ou phényle à substitution alkyle en C₁ à C₆, R², R³, R⁴, R⁵, R⁶, R⁷, R⁸, R⁹, identiques ou différents, représentent chacun un atome d'hydrogène, ou un groupe à huit groupes représentent un groupe choisi dans le groupe formé par un groupe phényle non substitué ou substitué par un atome d'halogène, un groupe cyano ou alkyle en C₁ à C₁₈, le groupe alkyle en C₁ à C₁₈ étant éventuellement substitué par un atome de fluor, un groupe cyano, -OCOR¹³, -OR¹¹, -OCOOR¹³, -CON(R¹¹)(R¹²) ou -OCONHR¹³, où R¹³ représente un groupe alkyle en C₁ à C₁₈, aryle en C₆ à C₁₀, pyridyle, pyrimidyle, pyrazinyle, triazinyle, furanyle, pyrrolyle, thiophényle, quinolyle, isoquinolyle ou coumarinyle, R¹¹ et R¹² représentent chacun un atome d'hydrogène, un groupe alkyle en C₁ à C₁₈ non substitué ou substitué par un groupe cyano ou hydroxy, ou R¹¹ et R¹² forment ensemble, ou éventuellement conjointement avec au moins un des autres groupes R² à R⁹, un noyau pyridine, pyrrole, furanne ou pyranne, un groupe diphényle non substitué ou substitué par un atome d'halogène, un groupe cyano ou alkyle en C₁ à C₁₈, le groupe alkyle en C₁ à C₁₈ étant éventuellement substitué par un atome de fluor, un groupe cyano, -OCOR¹³, -OR¹¹, -OCOOR¹³, -CON(R¹²)(R¹²) ou -OCONHR¹³, où R¹³ représente un groupe alkyle en C₁ à C₁₈, aryle en C₆ à C₁₀, pyridyle, pyrimidyle, pyrazinyle, triazinyle, furanyle, pyrrolyle, thiophényle, quinolyle, isoquinolyle ou coumarinyle, R¹¹ et R¹² représentent chacun un atome d'hydrogène, un groupe alkyle en C₁ à C₁₈ non substitué ou substitué par un groupe cyano ou hydroxy, ou R¹¹ et R¹² forment ensemble, ou éventuellement conjointement avec au moins un des autres groupes R² à R⁹ un noyau pyridine, pyrrole, furanne ou pyranne, un groupe naphtyle non substitué ou substitué par un atome d'halogène, un groupe cyano ou alkyle en C₁ à C₁₈, le groupe alkyle en C₁ à C₁₈ étant éventuellement substitué par un atome de fluor, un groupe cyano, -OCOR¹³, -OR¹¹, -OCOOR¹³, -CON(R¹¹)(R¹²) ou -OCONHR¹³, où R¹³ représente un groupe alkyle en C₁ à C₁₈, aryle en C₆ à C₁₀, pyridyle, pyrimidyle, pyrazinyle, triazinyle, furanyle, pyrrolyle, thiophényle, quinolyle, isoquinolyle ou coumarinyle, R¹¹ et R¹² représentent chacun un atome d'hydrogène, un groupe alkyle en C₁ à C₁₈ non substitué ou substitué par un groupe cyano ou hydroxy, ou R¹¹ et R¹² forment ensemble, ou éventuellement conjointement avec au moins un des autres groupes R² à R⁹ un noyau pyridine, pyrrole, furanne ou pyranne, un groupe pyridyle, pyrimidyle, pyrazinyle, triazinyle, furanyle, pyrrolyle, thiophényle, quinolyle, isoquinolyle, coumarinyle, benzofuranyle, benzimidazolyle, benzoxazolyle, dibenzofuranyle, benzothiophényle, dibenzothiophényle, indolyle, carbazolyle, pyrazolyle, imidazolyle, oxazolyle, isoxazolyle, thiazolyle, indazolyle, benzothiazolyle, pyridazinyle, cinnolyle, quinazolyle, quinoxalyle, phtalazinyle, phtalazindionyle, phtalimidyle, chromonyle, naphtolactamyle, benzopyridonyle, ortho-sulfobenzimidyle, maléinimidyle, naphtyridinyle, benzimidazolonyle, benzoxazolonyle, benzothiazolonyle, benzothiazolinyle, quinazolonyle, pyrimidyle, quinoxalonyle, phtalazonyle, dioxapyrimidinyle, pyridonyle, isoquinolonyle, isothiazolyle, benzisoxazolyle, benzisothiazolyle, indazolonyle, acridinyle, acridonyle, quinazolindionyle, benzoxazindionyle, benzoxazinonyle ou phtalimidyle, un atome d'halogène, un groupe alkyle en C₁ à C₁₈ non substitué ou substitué par un atome de fluor, un groupe cyano, -OCOR¹³, -OR¹¹, -OCOOR¹³, -CON(R¹¹)(R¹²) ou -OCONHR¹³, un groupe -OR¹⁰, -CN, -NR¹¹R¹², -COR¹³, -NR¹⁴COR¹³, -NR¹⁰COOR¹³, -NR¹³CONR¹¹R¹², -NHSO₂R¹³, -SO₂R¹³, -SOR¹³, -SO₂OR¹³, -CONR¹¹R¹², -SO₂NR¹¹R¹², -N=NR¹⁵, -OCOR¹³ et -OCONHR¹³, deux groupes vicinaux pouvant former ensemble un noyau carbocyclique ou hétérocyclique à 5 ou 6 éléments, où R¹³ représente un groupe alkyle en C₁ à C₁₈, aryle en C₆ à C₁₀ ou un groupe alkyle en C₁ à C₄ non substitué ou substitué par un atome d'halogène, ou un groupe benzyle à substitution alcoxy en C₁ à C₄ ou un groupe hétérocyclique de 5 à 7 éléments, R¹¹ et R¹² représentent, indépendamment l'un de l'autre, un atome d'hydrogène, un groupe alkyle en C₁ à C₁₈ non substitué ou substitué par un groupe cyano ou hydroxy, cycloalkyle en C₃ à C₂₄, aryle en C₆ à C₁₀ ou un groupe hétéroaryle de 5 à 7 éléments, ou R¹¹ et R¹² forment ensemble, ou éventuellement conjointement avec au moins un des autres groupes R² à R⁹, un noyau carbocyclique ou hétérocyclique à 5 ou 6 éléments, R¹⁰ représente un atome d'hydrogène, un groupe alkyle en C₁ à C₁₈, cycloalkyle en C₃ à C₂₄, aryle en C₈ à C₁₀ ou hétéroaryle de 5 à 7 éléments, R¹⁴ représente un atome d'hydrogène, un groupe alkyle en C₁ à C₁₈ non substitué ou substitué par un groupe cyano, hydroxy ou alcoxy en C₁ à C₄-carbonyle, un groupe cycloalkyle en C₃ à C₂₄, alkyle en C₁ à C₄-aryle, un groupe aryle en C₆ à C₁₀ non substitué ou substitué par un atome d'halogène, des groupes alkyle en C₁ à C₄ ou alcoxy en C₁ à C₄, ou un hétérocycle de 5 à 7 éléments, et R¹⁵ représente un groupe aryle en C₆ à C₁₀ non substitué ou substitué par un atome d'halogène, des groupes alkyle en C₁ à C₄ ou alcoxy en C₁ à C₄.

2. Pérylènehydrazide-imides de formule I selon la revendication 1, dans lesquels R¹ représente un groupe 1-méthyl-éthyle, 1-éthyl-n-propyle, 1-n-propyl-n-butyle, 1-n-butyl-n-pentyle, 1-n-hexyl-1-heptyle, 1-n-heptyl-1-n-octyle, 1-n-octyl-1-n-nonyle, 1-n-nonyl-1-décyle, 2,6-di-tert-butylphényle ou 2,5-di-tert-butylphényle et R², R³, R⁴, R⁵, R⁶, R⁷, R⁸, R⁹ représentent chacun un atome d'hydrogène.

3. Procédé de préparation des pérylènehydrazide-imides I par (a) réaction de pérylèneanhydride-imides de formule générale V 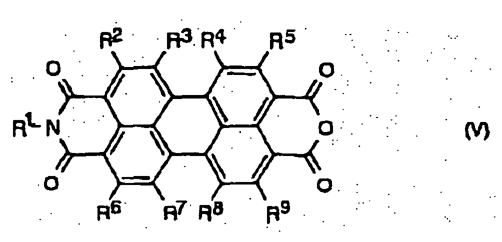 avec de l'hydrazine ou des composés libérant de l'hydrazine, ou par (b) hydrazinolyse de bisimides d'acide pérylène-3,4:9,10-tétracarboxylique de formule générale (VI) 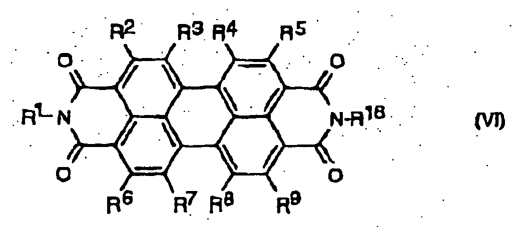 dans laquelle R¹⁸ a la même signification que R¹, mais R¹ et R¹⁸ ne portent pas obligatoirement en même temps les mêmes substituants.

4. Utilisation des pérylènehydrazide-imides I pour la détection de composés carbonyle, de sels métalliques, d'acides protoniques et d'agents d'acylation.

5. Pérylène-hydrazones de formule générale II 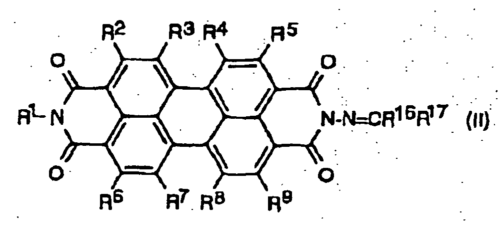 dans laquelle R¹⁶ et R¹⁷ sont identiques ou différents et ont la même signification que les groupes R² à R⁹

6. Procédé de préparation des pérylène-hydrazones II selon la revendication 5, **caractérisé en ce que** l'on fait réagir un pérylènehydrazide-imide I selon la revendication 1 avec un composé carbonyle R¹⁶R¹⁷C=O.

7. Procédé de détection de composés carbonyle par réaction d'un composé carbonyle avec un hydrazide, **caractérisé en ce que** l'on fait réagir un pérylènehydrazide-imide I selon la revendication 1 avec un composé carbonyle R¹⁶R¹⁷C=O et on analyse la pérylène-hydrazone II formée par spectroscopie ou chromatographie.

8. Formamides Ia 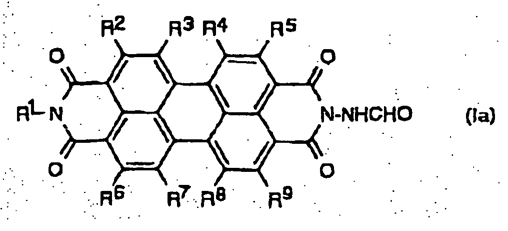 dans lesquels les groupes R¹ à R⁹ ont la signification indiquée dans la revendication 1.

9. Procédé de préparation des formamides Ia par réaction des pérylènehydrazide-imides I avec l'acide formique ou des dérivés de l'acide formique.

10. Utilisation des dérivés de pérylène I selon la revendication 1, et II selon la revendication 5, en tant que colorants pour la coloration en masse de polymères, en tant que colorants de cuve, en tant que colorants à mordant, pour la fabrication de peintures, de vernis, en particulier de vernis pour automobiles, de peintures, de colorants pour papier, d'encres d'imprimerie, d'encres, en particulier pour des utilisations dans des imprimantes à jet d'encre, à des fins de peinture et d'écriture, ainsi que dans l'électrophotographie, par exemple pour des systèmes de copie à sec (Xérographie) et pour les imprimantes laser, pour des marquages de sûreté, en tant qu'additif de substances colorantes telles que les pigments et les colorants nécessitant une nuance de couleur déterminée, pour le marquage d'objets en vue de la reconnaissance automatique de ces objets par fluorescence, pour convertir la fréquence de la lumière, pour la fabrication d'éléments d'affichage passif à diverses fins d'affichage, d'indication et de marquage, en tant que matière première pour des matières organiques supraconductrices, pour le marquage fluorescent de solides, à des fins décoratives et artistiques, à des fins de traçage, en tant que colorants fluorescents dans des procédés de détection haute sensibilité, en tant que colorants ou colorants fluorescents dans des systèmes optiques collecteurs de lumière, dans des collecteurs solaires à fluorescence, dans des affichages activés par fluorescence, dans des sources de lumière froide pour une photopolymérisation pour la production de matières plastiques, pour les essais de matériaux, dans les photoconducteurs, dans les procédés photographiques, dans les systèmes d'affichage, d'éclairage ou de convertisseurs d'image, en tant que partie d'un circuit intégré à semi-conducteur qui contient des colorants seuls ou conjointement avec d'autres semi-conducteurs, dans des systèmes chimioluminescents, dans des dosages immunologiques par luminescence ou d'autres procédés de détection par luminescence, en tant que colorants de signalisation, dans les lasers à colorants, en tant que support d'enregistrement optique et en tant qu'améliorants de rhéologie.
